(19) Europäisches Patentamt / European Patent Office / Office européen des brevets

(11) **EP 4 615 118 A1**

(12) **EUROPEAN PATENT APPLICATION**
published in accordance with Art. 153(4) EPC

(43) Date of publication:
**10.09.2025 Bulletin 2025/37**

(21) Application number: 23886303.9

(22) Date of filing: **02.11.2023**

(51) International Patent Classification (IPC):
**H04W 72/21** (2023.01)    **H04L 1/18** (2023.01)
**H04L 5/00** (2006.01)    **H04W 72/04** (2023.01)
**H04W 74/08** (2024.01)    **H04W 92/18** (2009.01)

(52) Cooperative Patent Classification (CPC):
**H04L 1/18; H04L 5/00; H04W 72/04; H04W 72/21;
H04W 72/25; H04W 74/08; H04W 88/04;
H04W 92/18**

(86) International application number:
**PCT/KR2023/017348**

(87) International publication number:
**WO 2024/096608 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.11.2022 KR 20220144160**

(71) Applicant: **Innovative Technology Lab Co., Ltd.
Seocho-gu, Seoul 06744 (KR)**

(72) Inventors:
• **PARK, Dong Hyun**
  **Seoul 06744 (KR)**
• **LEE, Won Seok**
  **Seoul 06744 (KR)**

(74) Representative: **Diehl & Partner
Patent- und Rechtsanwaltskanzlei mbB
Erika-Mann-Straße 9
80636 München (DE)**

(54) **METHOD AND DEVICE FOR PERFORMING SIDELINK COMMUNICATION IN UNLICENSED BAND**

(57)    A first wireless UE that operates in a sidelink unlicensed band in a wireless communication system may include at least one antenna configured to transmit and receive one or more wireless signals; at least one processor; and a memory configured to store instructions for the first wireless UE when executed by the at least one processor, and the first wireless UE may be configured to transmit SL data to a second wireless UE through a physical sidelink shared channel (PSSCH), to receive SL hybrid automatic repeat request (HARQ)-ACK information on the PSSCH based on a physical sidelink feedback channel (PSFCH) reception occasion (ROC) associated with the PSSCH, and to generate SL HARQ feedback information based on the SL HARQ-ACK information and report the same to a base station, and based on the unlicensed band, the PSSCH may be associated with a PSFCH ROC set that includes a plurality of PSFCH ROCs.

Fig. 20

**Description**

TECHNICAL FIELD

The present disclosure relates to a method and apparatus for a user equipment (UE) to report sidelink (SL) hybrid automatic repeat request (HARQ) information to a base station through uplink in a sidelink unlicensed band (SL-U) in a wireless communication system.

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond."

To satisfy the requirements requested by "IMT for 2020 and beyond," various proposals have been made to support various numerologies about a time-frequency resource unit standard by considering various scenarios, service requirements, and potential system compatibility in a 3-rd Generation Partnership Project (3GPP) new radio (NR) system.

Also, in a new communication system, discussions are ongoing on a method of supporting uninterrupted communication services at a service level for a user equipment (UE) with mobility (e.g., vehicle/train/ship type UE/personal smartphone) using not only terrestrial networks (TN) but also non-terrestrial networks (NTN).

DETAILED DESCRIPTION

TECHNICAL SUBJECT

The present disclosure relates to a user equipment (UE) operation method and apparatus in a sidelink unlicensed band (SL-U) of a wireless communication system.

The present disclosure relates to a method and apparatus for a UE to report SL hybrid automatic repeat request (HARQ) feedback information to a base station through uplink in the SL-U.

The present disclosure relates to a method and apparatus for determining SL HARQ feedback information that a UE reports to a base station in the SL-U.

TECHNICAL SOLUTION

According to an embodiment, a first wireless user equipment (UE) that operates in a sidelink unlicensed band in a wireless communication system may include at least one antenna configured to transmit and receive one or more wireless signals; at least one processor; and a memory configured to store instructions for the first wireless UE when executed by the at least one processor, wherein the first wireless UE is configured to transmit sidelink (SL) data to a second wireless UE through a physical sidelink shared channel (PSSCH), to receive SL hybrid automatic repeat request (HARQ)-ACK information on the PSSCH based on a physical sidelink feedback channel (PSFCH) reception occasion (ROC) associated with the PSSCH, and to generate SL HARQ feedback information based on the SL HARQ-ACK information and report the same to a base station, and based on the unlicensed band, the PSSCH is associated with a PSFCH ROC set that includes a plurality of PSFCH ROCs.

Also, according to an embodiment, the first wireless UE may perform SL communication with the second wireless UE based on SL unicast.

Also, according to an embodiment, the SL HARQ-ACK information may be determined based on a last PSFCH ROC set in a time domain among the one or more PSFCH ROC sets associated with the PSSCH, and the SL HARQ-ACK information may be generated based on a last received PSFCH among one or more PSFCHs received within the last PSFCH ROC set in the time domain.

Also, according to an embodiment, when a PSFCH is not received within the last PSFCH ROC set in the time domain among the one or more PSFCH ROC sets associated with the PSSCH and the PSFCH is not received within a PSFCH ROC set before the last PSFCH ROC set, the SL HARQ-ACK information may be generated as NACK.

Also, according to an embodiment, in a case in which the one or more PSFCH ROC sets associated with the PSSCH are located in different resource block sets (RBSs) and accordingly, a plurality of last PSFCH ROC sets are present, if a plurality of PSFCHs are received within the plurality of last PSFCH ROC sets, the SL HARQ feedback information may be generated based on a PSFCH with a lowest RBS index among the plurality of received PSFCHs.

Also, according to an embodiment, in a case in which the first wireless UE performs SL communication of receiving SL HARQ-ACK information from all of the second wireless UEs within a group using an SL groupcast method, if the SL HARQ-ACK information on SL groupcast PSSCH transmission is received in at least one PSFCH ROC among the plurality of PSFCH ROCs within the PSFCH ROC set, the SL HARQ feedback information may be determined as ACK.

Also, according to an embodiment, in a case in which the first wireless UE performs SL communication of receiving SL HARQ-ACK information from the second wireless UEs transmitting NACK within a group using an SL groupcast method, the SL HARQ feedback information may be determined as ACK depending on whether PSFCH reception is absent in PSFCH ROCs within all PSFCH ROC sets corresponding to PSSCH transmission.

EFFECT

According to the present disclosure, it is possible to provide a user equipment (UE) operation method in a sidelink unlicensed band (SL-U) of a wireless communication system.

According to the present disclosure, it is possible to provide a method for a UE to report SL hybrid automatic repeat request (HARQ) feedback information to a base station through uplink in the SL-U.

According to the present disclosure, it is possible to determine a method of determining SL HARQ feedback information that a UE reports to a base station in the SL-U.

The present disclosure is not limited to the aforementioned effects and still other effects not described may be clearly understood by one of ordinary skill in the art to which the present disclosure pertains from the following description.

BRIEF DESCRIPTION OF DRAWINGS

FIG. 1 illustrates an example of describing a new radio (NR) frame structure to which the present disclosure may apply.

FIG. 2 illustrates an NR resource structure to which the present disclosure may apply.

FIG. 3 illustrates an NR sidelink slot structure to which the present disclosure may apply.

FIG. 4 illustrates an NR sidelink frequency to which the present disclosure may apply.

FIG. 5 illustrates an NR sidelink resource pool configuration to which the present disclosure may apply.

FIG. 6 illustrates an unlicensed band for each region for NR sidelink communication to which the present disclosure may apply.

FIG. 7 illustrates use of a 5 gigahertz (GHz) unlicensed band to which the present disclosure may apply.

FIG. 8 illustrates a method of increasing a bandwidth in consideration of a power spectral density (PSD) limitation to which the present disclosure may apply.

FIG. 9 illustrates a method of configuring a guard band in consideration of a shared band within an intra-cell to which the present disclosure may apply.

FIG. 10 illustrates an interlace-based resource block (RB) resource assignment method to which the present disclosure may apply.

FIG. 11 illustrates a method of performing a listen before talk (LBT) procedure in an unlicensed band to which the present disclosure may apply.

FIG. 12 illustrates a channel occupancy time (COT) sharing and discovery burst transmission to which the present disclosure may apply.

FIG. 13 illustrates a method of applying cyclic prefix (CP) extension to uplink when performing COT sharing between downlink and uplink to which the present disclosure may apply.

FIG. 14 illustrates a semi-static channel access procedure to which the present disclosure may apply.

FIG. 15 illustrates a method of performing channel occupancy to which the present disclosure may apply.

FIG. 16 illustrates a method of configuring a bandwidth part (BWP) in a sidelink unlicensed band and a resource block set (RBS) in a resource pool to which the present disclosure may apply.

FIG. 17 illustrates a method of configuring a sidelink unlicensed band resource pool to which the present disclosure may apply.

FIG. 18 illustrates a frequency resource-based sidelink unlicensed band resource pool configuration using interlace assignment to which the present disclosure may apply.

FIG. 19 illustrates a sidelink unlicensed band resource pool configuration method to which the present disclosure may apply.

FIG. 20 illustrates a relationship between PSSCH and PSFCH ROC sets to which the present disclosure may apply.

FIG. 21 illustrates a method of generating SL HARQ-ACK information using a PSFCH ROC set within a single RBS-based unicast to which the present disclosure may apply.

FIG. 22 illustrates a method of generating SL HARQ-ACK information using a PSFCH ROC set within multi-RBS-based unicast to which the present disclosure may apply.

FIG. 23 illustrates a method of generating SL HARQ feedback information and reporting the same to a base station to which the present disclosure may apply.

FIG. 24 is a diagram illustrating a base station device and a terminal device to which the present disclosure may apply.

BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term 'base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

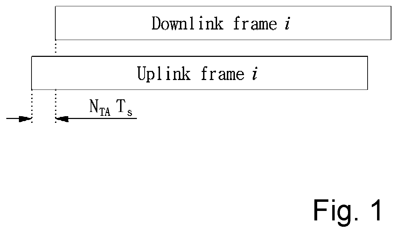

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant in a multiple relationship between an NR time unit and an LTE time unit. In LTE, $T_s = 1/(\Delta f_{ref} \cdot N_{f,ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as $k = T_s/T_c = 64$.

Referring to FIG. 1, a time structure of a frame for a downlink/uplink (DL/UL) transmission may include $T_f = (\Delta f_{max}N_f/100) \cdot T_s = 10ms$. Here, a single frame may include 10 subframes corresponding to $T_{sf} = (\Delta f_{max}N_f/1000) \cdot T_s = 1ms$. A number of consecutive orthogonal frequency division multiplexing (OFDM) symbols per subframe may be $N_{symb}^{subframe,\mu} = N_{symb}^{slot} N_{slot}^{subframe,\mu}$ . Also, each frame may be divided into two half frames and the half frames may include 0 to 4 subframes and 5 to 9 subframes. Here, the half frame 1 may include 0 to 4 subframes and the half frame 2 may include 5 to 9 subframes.

The $N_{TA}$ represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = \left(N_{TA} + N_{TA,offset}\right)T_c$$

The $N_{TA,offset}$ denotes a TA offset value occurring due to a duplex mode difference and the like. Basically, in a frequency division duplex (FDD), $N_{TA,offset}=0$. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6 GHz or less frequency, $N_{TA,offset}$ may be $39936T_C$ or $25600T_C$. $39936T_C=20.327\mu s$ and $25600T_C=13.030\mu s$. Also, in FR2 (Frequency Range 2) which is millimeter wave (mmWave), the $N_{TA,offset}$ may be $13792T_C$. At this time, $13792T_C=7.020$ $\mu s$.

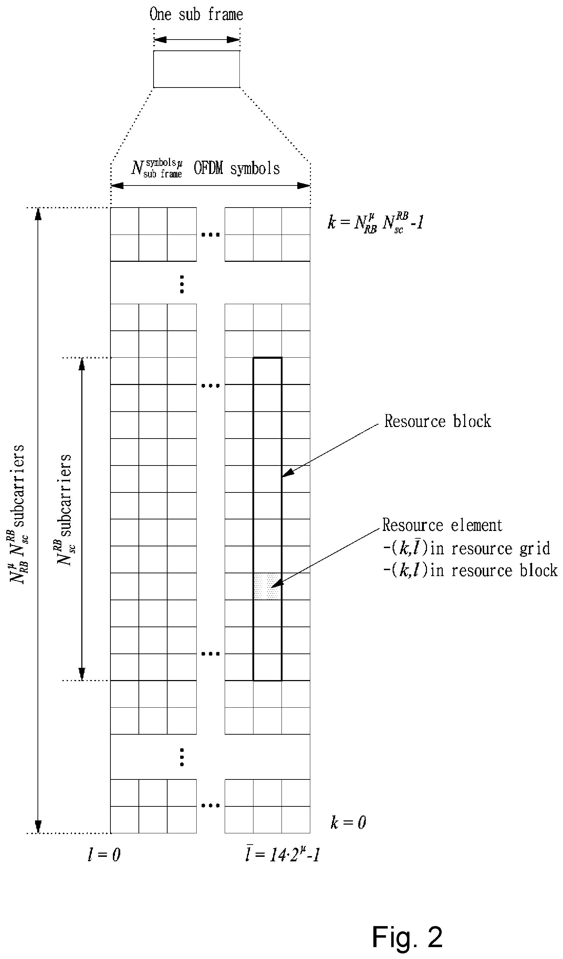

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB ($n_{PRB}$) may be configured. The index for RB may be utilized within a specific frequency band or system bandwidth. The index for RB may be defined as shown in Equation 2 below. Here, the $N^{RB}_{sc}$ represents the number of subcarriers per one RB and k represents the subcarrier index.

[Equation 2]

$$n_{PRB} = \left\lfloor \frac{k}{N_{sc}^{RB}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz.

Table 1 below shows an example of the numerologies supported by the NR system.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |

(continued)

| $\mu$ | $\Delta f = 2^{\mu} \cdot 15[kHz]$ | Cyclic prefix |
|---|---|---|
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu = 2$ and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu = 1$ and 2 may be used in the unlicensed band of 6 GHz or less and an SCS corresponding to $\mu = 3$ and 4 may be used in the unlicensed band above 6 GHz. Here, for example, if $\mu = 4$, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ( $N_{symb}^{slot}$ ), a number of slots per frame ( $N_{slot}^{frame,\mu}$ ), and a number of slots per subframe ( $N_{slot}^{subframe,\mu}$ ) for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu$ = 2 and SCS = 60 kHz), shows the number of slots per frame and the number of slots per subframe based on the normal slot for which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480 kHz may not be considered in Table 4, the present disclosure is not limited to such examples.

[Table 4]

| SCS | slots in 10ms | slots in 10ms | symbols in 10 ms |
|---|---|---|---|
| 15 kHz | 10 | 20 | 140 |
| 30 kHz | 20 | 40 | 280 |
| 60 kHz | 40 | 80 | 560 |
| 120 kHz | 80 | N/A | 1120 |
| 240 kHz | 160 | N/A | 2240 |
| 480 kHz | 320 | N/A | 4480 |

The V2X service may support a set of basic requirements for V2X services. The requirements are designed basically in sufficient consideration of a road safety service. Here, V2X UE may exchange autonomous status information through a SL. Also, the V2X UE may exchange the information with infrastructure nodes and/or pedestrians.

The V2X service (e.g., LTE Rel-15) may support at least one of a carrier aggregation in a SL, a high order modulation, a latency reduction, a transmit (Tx) diversity, and a sTTI (Transmission Time Interval). For this purpose, new features may be applied to the V2X communication. More particularly, the V2X UE may operate in consideration of coexistence with other V2X UEs. For example, the V2X UE may use the same resource pool as other V2X UEs.

For example, the technical features may be classified largely based on four categories as represented by the following Table 5 by considering the use cases for supporting a V2X service as the system aspect (SA) 1, but are not limited thereto. In Table 5, the "Vehicles Platooning" may be the technology that enables a plurality of vehicles to dynamically form a group and similarly operate. The "Extended Sensors" may be the technology that enables an exchange of data gathered from sensors or video images. The "Advanced Driving" may be the technology that enables a vehicle to drive based on semi-automation or full-automation. The "Remote Driving" may be the technology for remotely controlling a vehicle and the technology for providing an application. Based thereon, further description related thereto may be given by the following Table 5.

[Table 5]

| **Vehicles Platooning** |
|---|
| Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |
| **Extended Sensor** |
| Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |

(continued)

| Advanced Driving |
| --- |
| Advanced Driving enables semi-automated or full-automated driving. Each vehicle and/or RSU shares its own perception data obtained from its local sensors with vehicles in proximity and that allows vehicles to synchronize and coordinate their trajectories or manoeuvres. Each vehicle shares its driving intention with vehicles in proximity too. |

| Remote Driving |
| --- |
| Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements. |

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR SL based on the NR V2X system. However, the same or similar composition may be expanded and applied to the LTE V2X system, and is included but not limited to the following examples. That is, in the LTE V2X system, the present disclosure may apply to an interactable portion.

Here, NR V2X capability may not be limited to essentially supporting only V2X services and V2X RAT to be used may be selected.

Also, new service requirements for Public Safety and commercial use case for NR V2X services may be considered further in. For example, the use case may include, but is not limited to, at least one of more advanced V2X services, public safety services, the Network Controlled Interactive Service (NCIS), the Gap Analysis for Railways (MONASTERYEND), the Enhanced Relays for Energy Efficiency and Extensive Coverage (REFEC), and the Audio-Visual Service Production (AVPROD) certification.

A physical channel, a signal, a basic slot structure, and a physical resource may be configured for the NR V2X. Here, an NR Physical SL Shared Channel (NR PSSCH) may be a physical layer NR SL data channel. The V2X UEs may exchange data and control information (e.g., 2nd SCI, CSI) through the NR PSSCH. An NR Physical SL Control Channel (NR PSCCH) may be a physical layer NR SL control channel. The NR PSCCH refers to a channel for transmitting scheduling information of the NR SL data channel and control information (1st SL Control Information (SCI)) including 2nd SCI indication. That is, a V2X UE may transmit control information for SL data communication to another V2X UE through PSCCH. An NR Physical SL Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X UE and then may receive the HARQ feedback information of the corresponding data through NR PSFCH. An NR SL Synchronization Signal/Physical SL Broadcast Channel (SLSS/PSBCH) block refers to a channel block in which an NR SL synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary SL Synchronization Signal (PSSS) and a Secondary SL Synchronization Signal (SSSS). The synchronization signal is generated based on at least one SLSSID value. The NR Physical SL Broadcast Channel (PSBCH) refers to a channel for transmitting system information required to perform V2X SL communication. The NR PSBCH is transmitted with the SLSS and periodically transmitted based on a set of SLSS/PSBCH block indexes to support beam-based transmission.

Also, a PSCCH and PSSCH may be defined for supporting NR V2X. A UE may transmit SCI to another UE via PSCCH. Here, the Tx UE may transmit the first SCI (1st SCI, SCI format 1-A) to the Rx UE via PSCCH. The 1st SCI may be used for scheduling the PSSCH and the secondary SCI (2nd SCI) within the PSSCH, and the 1st SCI may contain priority information, time/frequency resource allocation information, resource reservation information, Demodulation Reference Signal (DMRS) pattern information, 2nd SCI format indicator information, 2nd beta-offset indicator information as a parameter for the SCI and PSSCH rate matching operation, DMRS port count information, Modulation Coding Scheme (MCS) information, additional MCS table indicator information (e.g., indicating one of the 64 QAM, or 256 OAM or URLLC MCS table), PSFCH overhead indicator information (a parameter for PSSCH rate matching operation with 2nd SCI), and at least one of the reserved bits.

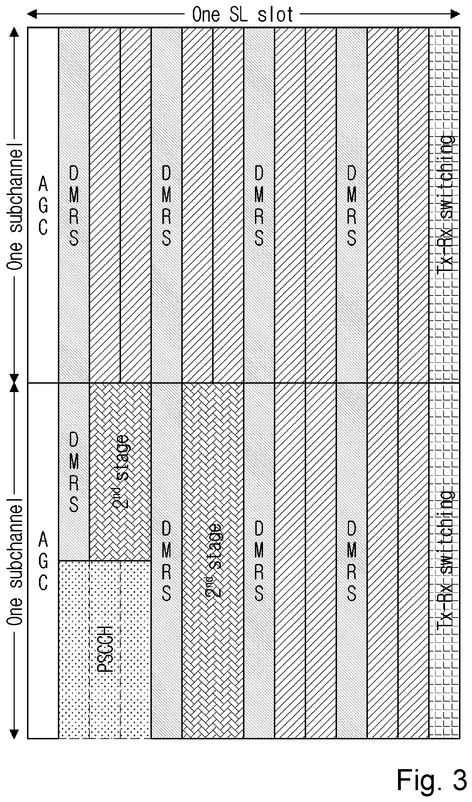

FIG. 3 illustrates an NR SL slot structure to which the present disclosure may apply.

Referring to FIG. 3, a single SL slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to the remaining OFDM symbols excluding the AGC symbol and the Tx-Rx switching symbol. In detail, locations of the PSCCH (1st SCI), the 2nd SCI, PSSCH (Data), and the DMRS for demodulation may be the same as in FIG. 3, but are not limited thereto. For example, in FIG. 3, the PSCCH and the 2nd SCI are present in the first subchannel and the PSSCH and the DMRS may be allocated considering this. As another example, the second subchannel refers to a subchannel in which the PSCCH and the 2nd SCI are absent and the PSSCH and the DMRS may be allocated as in FIG. 3.

Here, the number of PSSCH DMRSs may be configured according to a higher layer configuration and one or more PSSCH DMRSs may be configured according to a channel environment of the UE. A PSCCH (1st SCI) receives a demodulation using a DMRS of PSCCH (i.e., PSCCH DMRS) and is equally allocated and transmitted to every four resource elements (REs) within a single resource block (RB). On the contrary, the 2nd SCI is decoded using the PSSCH DMRS.

Also, for example, a single resource pool associated with an NR SL may support the frequency division multiplexing (FDM), the time division multiplexing (TDM), and the spatial divisional multiplexing (SDM). This means that each resource in a single resource pool can be divided and used based on the frequency, the time, and the space, which can increase the resource efficiency.

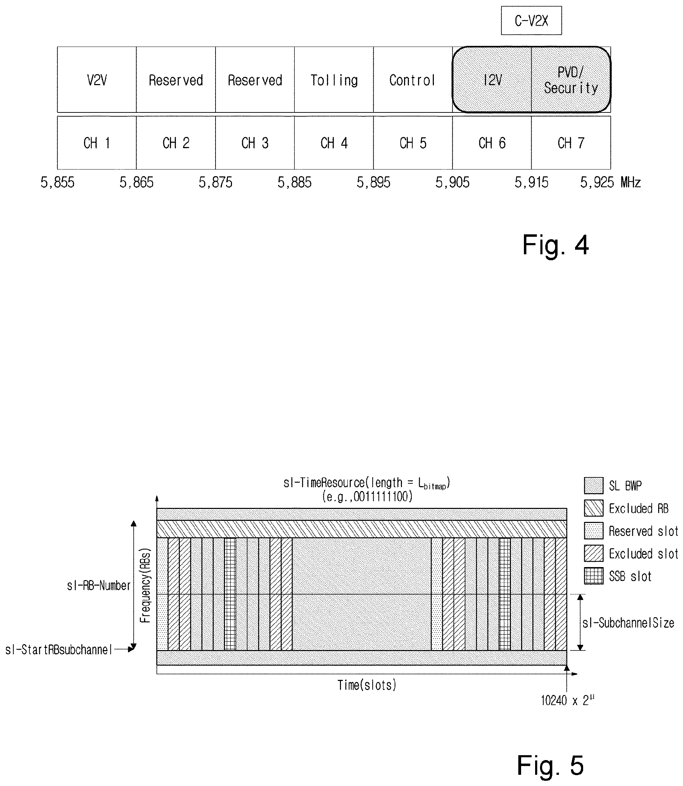

FIG. 4 illustrates an NR SL frequency to which the present disclosure may apply. For example, the NR SL may operate based on at least one of Frequency Range 1 (FR1) (sub 6 GHz) and Frequency Range 2 (FR2) (i.e., up to 52.6 GHz), the unlicensed ITS bands, and the licensed band. In detail, for example, referring to FIG. 4, 5,855 to 5,925 MHz may be allocated for an ITS service (technology neutral manner).

Also, the NR V2X quality of service (QoS) requirements may be considered. That is, the delay, the reliability, and a data rate may need to be satisfied with predetermined conditions related to the requirements for an NR V2X service. Here, the requirements may be configured as in Table 6 below and Table 7 may show the PC5 QoS for NR V2X.

Here, to satisfy the QoS requirements, the access stratum (AS) level QoS management may be required. To this end, a HARQ and CSI feedback associated with a link adaptation may be required. Also, each of the NR V2X UEs may have a different maximum bandwidth capability (max. BW capability). Considering this, AS level information that includes at least one of UE capability, QoS related information, a radio bearer configuration, and a physical layer configuration may be exchanged between the NR V2X UEs.

[Table 6]

| |
|---|
| - Delay:[3, 100ms]<br>- Reliability:[90%, 99.999%]<br>- Data rate: up to 1Gbps (TS22.186) |

[Table 7]

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 1 | GBR (NOTE 1) | 3 | 20 ms | $10^{-4}$ | N/A | 2000 ms | Platooning between UEs-Higher degree of automation; Platooning between UE and RSU-Higher degree of automation |
| 2 | | 4 | 50 ms | $10^{-2}$ | N/A | 2000 ms | Sensor sharing-higher degree of automation |
| 3 | | 3 | 100 ms | $10^{-4}$ | N/A | 2000 ms | Information sharing for automated driving-between UEs or UE and RSU-higher degree of automation |

(continued)

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 55 | Non-GBR | 3 | 10 ms | $10^{-4}$ | N/A | N/A | Cooperative lane change-higher degree of automation |
| 56 | | 6 | 20 ms | $10^{-1}$ | N/A | N/A | Platooning informative exchange-low degree of automation; Platooning-information sharing with RSU |
| 57 | | 5 | 25 ms | $10^{-1}$ | N/A | N/A | Cooperative lane change-lower degree of automation |
| 58 | | 4 | 100 ms | $10^{-2}$ | N/A | N/A | Sensor information sharing-lower degree to an RSU |
| 59 | | 6 | 500 ms | $10^{-1}$ | N/A | N/A | Platooning-reporting to an RSU |
| 82 | Delay Critical GBR (NOTE 1) | 3 | 10 ms | $10^{-4}$ | 2000 bytes | 2000 ms | Cooperative collision avoidance; Sensor sharing-Higher degree of automation; Video sharing-higher degree of automation |
| 83 | | 2 | 3 ms | $10^{-5}$ | 2000 bytes | 2000 ms | Emergency trajectory alignment; Sensor sharing-Higher degree of automation |
| •NOTE 1: GBR and Delay Critical GBR PQIs can only be used for unicast PC5 communications. Editor's note: It is FFS if GBR and Delay Critical GBR can also be used for broadcast and groupcast. | | | | | | | |
| • NOTE 1: For standardized PQI to QoS characteristics mapping, the table will be extended/updated to support service requirements for other identified V2X services. • NOTE 2: The PQIs may be used for other services than V2X. | | | | | | | |

Hereinafter, a SL HARQ procedure is described. Whether the V2X UE is to report a HARQ feedback is indicated by a higher layer (e.g., RRC) configuration and SCI signaling (e.g., 2nd SCI). For example, if the V2X UE performs SL communication based on a groupcast, whether to report the HARQ feedback may be determined based on a distance between a Tx UE and a Rx UE.

When the V2X UE performs at least one of unicast and groupcast transmission, the SL HARQ feedback may be enabled or disabled. Here, enabling/disabling the HARQ feedback may be determined based on at least one of a channel condition (e.g., RSRP), a distance between Tx UE and Rx UE, and QoS requirements.

In the case of groupcast, whether to transmit a HARQ feedback may be determined based on a physical distance between the Tx UE and the Rx UE. Here, when the HARQ feedback is performed for the groupcast transmission via a PSSCH, the Rx UE may send a negative response only when the received PSSCH decoding fails. It may be called an option 1 operation. Moreover, when the HARQ feedback is performed for the groupcast transmission via a PSSCH, the Rx UE may send a positive response or a negative response based on whether a PSSCH decoding succeeds and it may be called an option 2 operation. In the option 1 operation of feeding back only a negative response as a NACK only HARQ feedback, if the physical distance between the Tx UE and the Rx UE is less than or equal to the communication range requirements, a HARQ feedback corresponding to the PSSCH reception may be performed. On the contrary, if the physical distance between the Tx UE and the Rx UE is greater than the communication range requirements, the V2X UE may not perform the HARQ feedback corresponding to the PSSCH reception.

Here, a location of the Tx UE is indicated to the Rx UE through SCI signaling associated with the PSSCH. The Rx UE may estimate a distance from the Tx UE based on both pieces of information included in the received SCI and its location information and may operate as above.

Also, when a unicast communication is performed based on the V2X, a case in which an SL HARQ feedback is enabled may be considered. The Rx UE may generate and transmit a HARQ ACK/NACK corresponding to the PSSCH depending on whether the decoding of a corresponding transport block (TB) succeeds.

Then, an NR SL resource allocation mode refers to a mode in which a base station schedules a SL transmission resource. Here, a mode in which the base station schedules a SL transmission resource may be mode 1. For example, when the V2X UE is located within the base station coverage, the V2X UE may receive SL resource information from the base station. On the contrary, there is a mode in which the V2X UE directly determines a resource for SL transmission on either a SL resource configured by the base station/network or a pre-configured SL resource. Here, a mode in which the UE directly determines a SL transmission resource may be mode 2.

Also, numerology and waveform for sidelink may be considered, which may be as shown in Table 8 below. In detail, regarding PSSCH/PSCCH and PSFCH in a sidelink, SCS and CP lengths supported in each of FR1 and FR2 may be as shown in Table 8 below. Here, the waveform may support only OFDM without supporting DFT-S-OFDM, but may not be limited thereto. A sidelink-synchronization signal block (SL-SSB) may be defined independently for each frequency range, which may be similar to NR-Uu.

[Table 8]

|  | FR 1 | FR2 |
|---|---|---|
| PSSCH/PSCCH and PSFCH | - Normal CP for 15 kHz, 30 kHz, 60 kHz<br>- Extended CP for 60 kHz | - Normal CP for 60 kHz, 120 kHz,<br>- Extended CP for 60 kHz |
| note | No support of DFT-S-OFDM for NR SL in Rel-16 | |

FIG. 5 illustrates an NR sidelink (SL) resource pool configuration. Referring to FIG. 5, a resource pool may represent resources in a time and a frequency used for sidelink transmission and reception. For example, at least one resource pool may be configured within a single SL BWP within a single carrier. Here, resources of the resource pool may be configured based on time resources of a slot set unit and frequency resources of a consecutive subchannel set unit. Also, the resource pool may be configured for each of transmission and reception.

In more detail, as time resources for resource pool configuration provided in an NR sidelink, at least one of a resource pool time period, a sidelink slot set (sl-TimeResource (length = $L_{bitmap}$)) within a single resource pool application period, and a first symbol and the number of consecutive symbols for a set of consecutive symbols within a single slot may be configured. As frequency resources, at least one of a bandwidth of at least one subchannel (e.g., sl-SubchannelSize = {10, 15, 20, 25, 50, 75 and 100} RBs), the entire bandwidth of the resource pool indicated by the number of consecutive subchannels (set of consecutive subchannels (e.g., sl-NumSubchannel = {1 to 27})), and a location in the frequency domain of a first subchannel of the resource pool (sl-StartRBsubchannel={0 to 265}) may be configured. For example, resources in the time domain and the frequency domain may be configured based on higher layer parameters. In FIG. 5, a frequency resource corresponding to an excluded resource block (RB) may represent some remaining RBs if total available RB resources do not exactly match a subchannel size (i.e., if it does not reach the number of RBs constituting a single subchannel). Here, the corresponding resources may not be used in the NR sidelink. Also, for example, a reserved slot may indicate a remaining slot in a situation in which a multiple unit of a length of a bitmap (e.g., sl-TimeResource) on a time resources is not established and may not be used as NR sidelink resources.

Next, a case in which an unlicensed band (unlicensed spectrum) is used for communication between a base station and a UE may be considered. For example, a communication scheme based on the unlicensed band may be a scheme of occupying a channel through competition and performing communication based on the occupied channel. The unlicensed band-based communication may be performed even for communication between the base station and the UE. In the following, described is an operation based on a case in which the unlicensed band is used for the sidelink communication. That is, the unlicensed band may be used even for sidelink communication that is communication between UEs. Also, the sidelink resource pool needs to be configured in consideration of using the sidelink unlicensed band. In more detail, the sidelink communication may be performed based on the resource pool. In the case of performing communication through the unlicensed band, the resource pool configuration needs to be differently configured.

For example, the resource pool of the sidelink communication may be configured based on a slot unit and a symbol that may be used for sidelink within a slot may be determined, which is the same as shown in FIG. 5. Also, as described above with FIG. 5, in the frequency domain, it may be configured based on the number of consecutive subchannels. The aforementioned sidelink resource pool configuration may be configured in consideration of unlicensed band communication, which is described below.

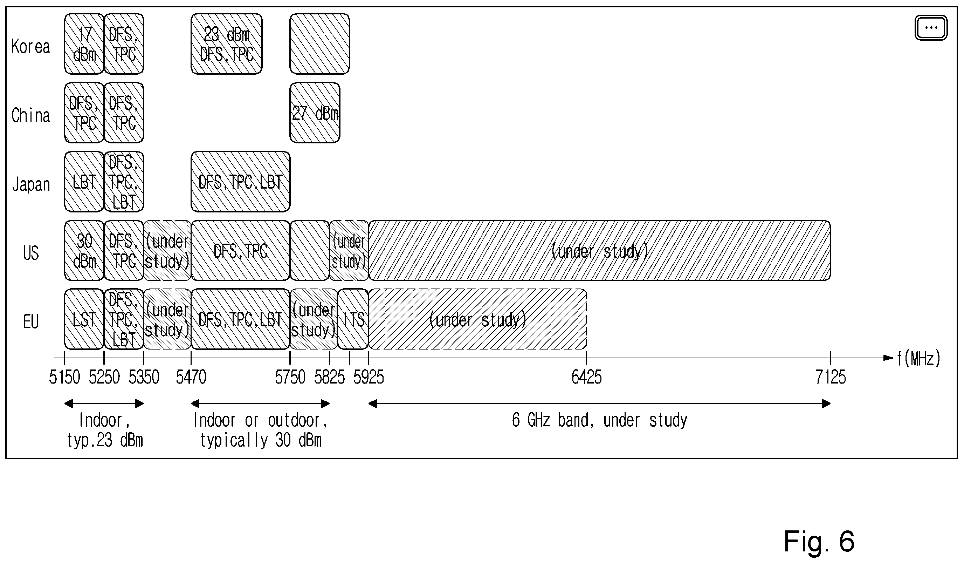

FIG. 6 illustrates an unlicensed band for each region for NR sidelink communication to which the present disclosure may apply. In Table 8 above, the frequency range of NR FR1 may be from 450 MHz to 6 GHz, but the corresponding frequency range may change from 450 MHz to 7.125 GHz. The frequency range of NR FR1 may be changed for the unlicensed band of 6 GHz band, but may not be limited thereto.

For example, the unlicensed band may be located below 1 GHz, 2.4 GHz, 5 GHz, 6 GHz, 37 GHz (USA only), and 60 GHz, but may not be limited thereto. Here, referring to FIG. 6, for example, in the system, 5 GHz band may be band 46 that is defined as 5150 to 5925 MHz. Also, for example, for LAA operation, band 49 (3550-3700 MHz) may be defined as a citizens broadband radio service (CBRS), but may not be limited thereto.

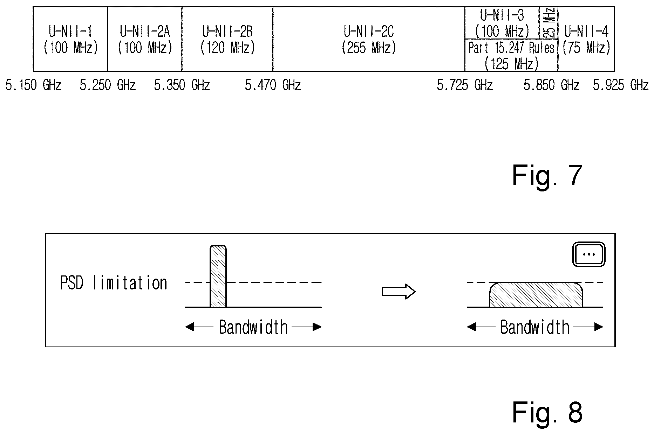

FIG. 7 illustrates use of a 5 GHz unlicensed band to which the present disclosure may apply. Referring to FIG. 7, each band within the 5 GHz unlicensed band may be set and, based thereon, use of the unlicensed band may be set. For example, it may be divided into 20 MHz units and each 20 MHz may be a single channel.

Here, the low frequency band of 5150 to 5350 MHz within the aforementioned band is specified in most regions to have the maximum transmit power of 23 dBm for indoor use. Also, in the band of 5470 MHz or more, it is used in a region with transmit power of up to 30 dBm and outdoor use in most areas. Here, for example, additional requirements may be present in some regions, given as effective isotropic radiated power (EIRP) values based on Table 9 below, along with limitation of the maximum transmit power.

[Table 9]

| Power spectral density, maximum channel occupancy time, minimum occupied bandwidth and dynamic frequency selection, transmit power control and LBT |
| --- |

Here, power spectral density (PSD) may indicate that the device is limited to performing full power transmission within a reference bandwidth. As a detailed example, European regulations may limit the PSD to 10 dBm/MHz. Therefore, in non-20MHz bandwidths, the device may not perform transmission at the maximum transmit power of 23 dBm.

FIG. 8 illustrates a method of increasing a bandwidth in consideration of a PSD limitation to which the present disclosure may apply. For example, as in FIG. 8 a case of small data transmission that requires only a small bandwidth may be considered. Here, in the case of performing small data transmission through a wide bandwidth, coverage may be expanded. Also, minimum bandwidth occupancy regulation may be satisfied with transmission through the wide bandwidth. Considering this, a method of performing transmission in the wide bandwidth may be preferred for small data.

Also, for example, in the case of occupying a channel through a channel access procedure in the unlicensed band, a maximum channel occupancy time (COT) corresponding to an occupancy-allowable maximum time may be differently set for each region. For example, Japan allows the maximum COT of up to 4 ms, while Europe allows the maximum COT of up to 8 ms or 10 ms. However, it is only an example and is not limited to the aforementioned embodiment. Also, for example, Europe may support frame base equipment (FBE) and load base equipment (LBE) rules. Here, FBE may be set to High Performance Radio (LAN HiperLAN)/2, and LBE may be adopted and applied from Wi-Fi standard specification and both may be supported in NR as a new communication system.

Also, for example, the minimum occupied bandwidth may be a bandwidth regulation that needs to be minimally occupied when a channel access is successful once. For example, the minimum occupied bandwidth regulation may be configured to occupy a nominal channel BW of 80 to 90% or more. As a detailed example, when the UE transmits a PUSCH to the base station in an unlicensed band, resources for the PUSCH may be requested to be allocated in an interlaced form in a specific bandwidth, but may not be limited to the corresponding embodiment.

Also, a regulation for dynamic frequency selection may be a regulation that limits bandwidth use for the purpose of protecting a system (e.g., radio) having high priority for use of the unlicensed band. Also, a transmit power control regulation may be a regulation that limits transmit power much lower than an allowed maximum transmit power value to be used. Also, a listen before talk (LBT) regulation may be a regulation for a channel access procedure, and Europe may support FBE and LBE rules. Here, FBE may be Hiperlan/2, and LBE may be adopted and applied from Wi-Fi standard specification and both may be supported in NR.

Also, for example, the 5 GHz unlicensed band may be used based on the aforementioned description, but, use of the 6 GHz band is under discussion in every country and institution. Here, the 6 GHz band may be a band that is not used in a mobile system, which differs from the 5 GHz. That is, different from the 5 GHz band shared in a plurality of mobile communication systems, the 6 GHz band may be used for a single specified communication system. Therefore, problems or inefficiency arising due to coexistence of different systems may be reduced.

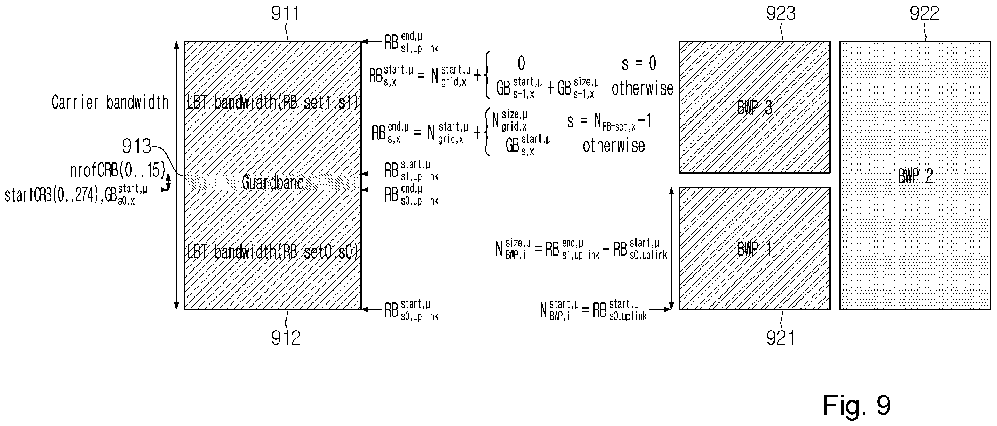

FIG. 9 illustrates a method of configuring a guard band in consideration of a shared band (e.g., unlicensed band) within an intra-cell to which the present disclosure may apply.

Referring to FIG. 9, to support a wideband operation in a shared spectrum access, a UE may receive IntraCellGuardBandsPerSCS parameter for each of an UL carrier and a DL carrier from a base station based on base station configuration. The UE may be provided with intra-cell guard bands of $N_{RB\text{-}set,x}$ - 1 in a single carrier (subcarrier spacing index=$\mu$). Referring to FIG. 9, the UE may receive higher layer signaling for a start common resource block (CRB) and the number of CRBs for each guard band. For example, the CRB may be a resource block defined/configured based on a point A that is a start location of a transmission bandwidth in a carrier in the frequency domain. The UE may verify information on the point A through base station signaling and, based thereon, may recognize a CRB location in frequency. Here, each guard band may be defined based on $GB_{s,x}^{\text{start},\mu}$ parameter as the start CRB and, in each guard band, the size of the number of CRBs may be defined based on $GB_{s,x}^{\text{size},\mu}$ parameter. The UE may receive the aforementioned information through higher layer signaling based on each of startCRB and nrofCRBs parameters. Here, $s \in \{0,1, ..., N_{\text{RB-set},x} - 2\}$, $N_{\text{RB-set},x}$ denotes the number of RB sets, and x may be configured as DL or UL for downlink and uplink. $N_{\text{RB-set},x}$ RB sets may be configured as a resource block set (RBS) within a single carrier through a guard band configuration. For example, the guard band may be configured based on IntraCellGuardBandsPerSCS parameter and the RBS may be configured within a single carrier accordingly.

Here, each RBS frequency bandwidth may correspond to an LBT frequency bandwidth. That is, each RBS may be set as a bandwidth corresponding to an LBT procedure performed through the base station and the UE. For example, in FIG. 9, if LBT succeeds in a correspondence area corresponding to the LBT bandwidth, an RB set 1 911 and an RB set 2 922 may occupy a corresponding band and may perform communication. That is, the RBS may correspond to the LBT bandwidth. For example, a Tx node (e.g., gNB or UE) may determine channel occupancy for the unlicensed band through an LBT channel access procedure performed on RBS resources corresponding to the LTE bandwidth. When the LBT procedure succeeds in a single RBS, the Tx node may perform transmission on a resource corresponding to the RBS.

Here, each RBS may be defined as a start CRB and an end CRB. The start CRB may be $RB_{s,x}^{\text{start},\mu}$, and the end CRB may be $RB_{s,x}^{\text{end},\mu}$. Here, a size of guard band 913 may be nrofCRBs. For example, a size of a guard band 913, nrofCRBs, may not be expected to be set to a size smaller than the number of applicable intra-cell guard bands defined in consideration of requirements regarding an interference status of a wireless bandwidth according to subcarrier spacing $\mu$ and carrier size $N_{\text{grid},x}^{\text{size},\mu}$.

Here, the start CRB and the end CRB for each RBS (911, 912) may be determined based on RBS index s, and RBS index s may be s $\in \{0,1, ..., N_{\text{RB-set},x} - 1\}$. That is, RBS index s may be a resource block with a size of $RB_{s,x}^{\text{size},\mu}$, and $RB_{s,x}^{\text{size},\mu}$ denotes the number of CRBs determined through the start CRB and the end CRB based on Equation 3 below. Also, in each RBS, the start CRB and the end CRB may be as shown in Equation 4 and Equation 5 below.

[Equation 3]

$$RB_{s,x}^{\text{size},\mu} = RB_{s,x}^{\text{end},\mu} - RB_{s,x}^{\text{start},\mu} + 1$$

[Equation 4]

$$RB_{s,x}^{\text{start},\mu} = N_{\text{grid},x}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$$

[Equation 5]

$$RB_{s,x}^{\text{end},\mu} = N_{\text{grid},x}^{\text{start},\mu} + \begin{cases} N_{\text{grid},x}^{\text{size},\mu} - 1 & s = N_{\text{RB-set},x} - 1 \\ GB_{s,x}^{\text{start},\mu} - 1 & \text{otherwise} \end{cases}$$

For example, if the UE is not provided with IntraCellGuardBandsPerSCS parameter configuration, CRB indexes for a nominal intra-cell guard band and an RBS pattern based on carrier $\mu$ and carrier size $N_{\text{grid},x}^{\text{size},\mu}$ may be determined according to requirements of RF standard. Also, for example, if the aforementioned nominal intra-cell guard band and RBS pattern do not include an intra-cell guard band, an RBS of the corresponding carrier may be assumed to be 1.

For example, in FIG. 9, two LBT BWs (RBS 0, RBS1) may be configured in a single BWP 922 within a single carrier bandwidth. Here, a single guard band 913 may be configured between the two RBSs 911 and 913. A location of each of the two RBSs 911 and 913 may be determined as shown in FIG. 9, based on the aforementioned higher layer parameter. Also, for example, when a plurality of BWPs 921 and 923 are configured within a single carrier bandwidth, an RBS associated with each BWP may be verified. Here, RBSs corresponding to a first RBS (=s0, 912) and a last RBS(=s1, 911) of each BWP among the RBSs 911 and 912 within the carrier may be indexed through s0 and s1 indexes.

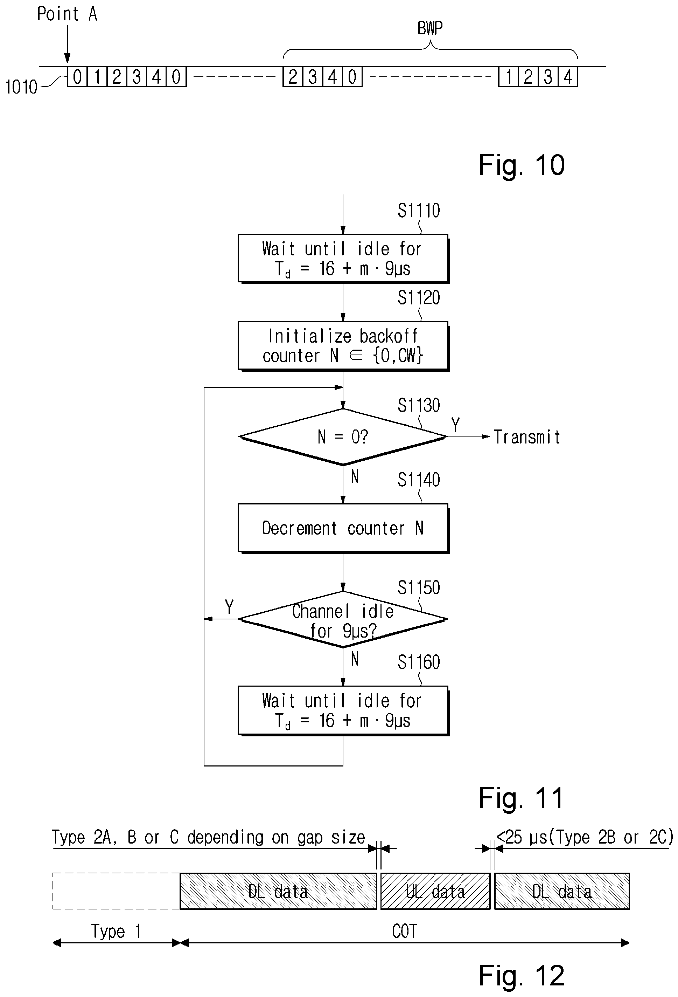

FIG. 10 illustrates an interlace-based RB resource assignment method applied to the present disclosure. PUCCH/PUSCH transmission may be performed through RB resources assigned based on interlaces. Here, a reference point for RB resource assigned based on interlace may be point A 1010. The UE may acquire information on the point A 1010 through base station signaling, which is described above. Also, a common resource block (CRB) may be a resource block defined/configured based on the point A 1010 that is a start location point of a transmission bandwidth on a carrier. That is, when physical uplink control channel (PUCCH)/physical uplink shared channel (PUSCH) transmission is performed with interlace-based RB resources, all the interlaces may be used based on the same configuration on the carrier based on the reference point A 1010 and the CRB. For example, as described above, the existing wireless communication system (e.g., LTE LAA) and wireless communication system (e.g., NR) may perform PUCCH/PUSCH transmission with the interlace-based RB resources, but may not be limited thereto.

For example, in the case of 15 kHz SCS, an interlace of M=10 may be defined for the entire bandwidth. In the case of 30 kHz SCS, an interlace of M=5 may be defined for the entire bandwidth. Also, X bits may be provided for interlace assignment through frequency resource assignment-related signaling. As a detailed example, if X = 5 for 30 kHz SCS, X bits may indicate all possible interlace combinations. As still another example, if X = 6 for 15 kHz SCS, X bits may indicate a start interlace index and the number of consecutive interlaces. For example, a value of 55 may be required based on the combination of the start interlace index and the number of consecutive interlaces. Therefore, when indicated with 6 bits, 9 remaining RIV values may be present and the 9 remaining RIV values may indicate specific pre-defined interlace combination.

Also, Y bits may be provided for RB set assignment through frequency resource assignment-related signaling. RB set assignment may be start and end RB sets based on an RIV format. Here, RB sets may be consecutive at all times. Also, for example, when two adjacent RB sets are assigned, a guard band between the RB sets may also be assigned and may be used as a frequency resource.

Also, for example, a method may be required to fairly access and use a channel between various wireless access technologies/systems (e.g., Wi-Fi, LAA, NR-U, etc.) in an unlicensed band. For example, a rule (e.g., ETSI rule) for channel access based on the aforementioned 5 GHz and 6 GHz frequency bands may be provided, and matters as shown

Table 10 below may be specified, but may not be limited thereto.

[Table 10]

| |
|---|
| - nominal center frequencies |
| - nominal channel bandwidth and occupied channel bandwidth |
| - RF output power limits |
| - transmit power control (TPC) and power density requirements |
| - transmitter unwanted emissions limits |
| - receiver spurious emissions requirements |
| - dynamic frequency selection (DFS) |
| - adaptivity (channel access -mechanism) |
| - receiver blocking requirements |
| - user access restrictions |
| - geo-location capability |

Here, as a channel access method based on Table 10, Frame Base Equipment (FBE) and Load Base Equipment (LBE) rules may be supported. For example, the LBE access rule may consider factors of Table 11 below. The channel access may be performed by determining a channel occupancy status based on clear channel assessment (CCA) measurement. Also, transmission based on an occupied channel may be performed after determining transmit power based on channel occupancy.

[Table 11]

| |
|---|
| - Medium energy sensing: performs energy measurement in a transmission candidate channel during an observation slot (9 us) time based on clear channel assessment (CCA) measurement. |

(continued)

> ♦ Energy detection (ED) threshold (TL): Threshold for determining whether a channel is occupied. If energy greater than TL is detected, the UE determines that the channel is occupied, and otherwise, determines that the channel is empty (idle). The ED threshold is specified based on the maximum transmit power as shown below, assuming 0 dBi receive antenna.
> · For PH ≤ 13 dBm: TL = -75 dBm/MHz (i.e., -62 dBm / 20 MHz)
> · For 13 dBm < PH < 23 dBm: TL = -85 dBm/MHz + (23 dBm - PH)
> · For PH ≥ 23 dBm: TL = -85 dBm/MHz (i.e., -72 dBm/20 MHz)

A channel access priority class (CAPC) may be set for channel access, which may be as shown in Table 12. Here, a priority class may specify priority based on a specific traffic type and quality of service (QoS) requirements. For example, in Table 12, four priority classes may be defined. Here, a different priority counter ($p$) value may be specified for each priority class. Here, the higher priority class, the lower the priority counter value may be.

Also, for example, a channel occupancy time (COT) may be a transmission burst duration. Here, the maximum COT limit may be differently determined for each different priority class. A higher priority class may have a shorter maximum COT duration. That is, a higher priority class may have a lower priority counter value and a shorter maximum COT duration.

Also, for example, a contention window (CW) may be a window for selecting a counter value for performing a backoff procedure for channel access. Here, the contention window may be different for each priority class, which may be as shown in Table 12 below.

[Table 12]

| Channel Access Priority Class ($p$) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

FIG. 11 illustrates a method of performing a listen before talk (LBT) procedure in an unlicensed band to which the present disclosure may apply. For example, a Type 1 LBT procedure (LBT cat 4) may be considered based on the aforementioned LBE. The LBT procedure may be set based on category 1 to category 4, which is described below. Referring to FIG. 11, a Tx node may wait to verify whether a channel is available for a defer period (S1110). Here, the defer period may be determined based on a priority class of Table 13 below. For example, the defer period may measure whether a channel is available for at least 25 us. Here, that feedback information on data transmission is transmitted within a maximum of 16 us may be considered. Considering the above, the defer period may measure whether the channel is available for at least 25 us.

When it is determined that the channel is available for the defer period, the corresponding node may perform a backoff procedure. Here, backoff counter N may be initialized to a random value between 0 and a CW value (S1120). That is, the random value between 0 and the CW value may be used as the backoff counter. Here, whether the channel is available may be counted based on 9 us slot and backoff may be performed as much as the backoff counter value. Here, a larger backoff value may be set based on a larger contention window and a collision probability may decrease accordingly.

Then, whether the backoff counter value is 0 may be determined (S1130). If the backoff counter value is 0, the corresponding node may perform transmission. The corresponding node may use the channel up to the maximum COT during which occupancy is allowed, based on a priority class for transmission. On the contrary, if the backoff counter value is not 0, the backoff counter value may decrement, that is, decrease (S1140). Then, whether the channel is idle in a next 9 us slot may be determined (S1150). Here, if the channel is in an idle state in the 9 us slot, whether the backoff counter value is 0 may be verified again. If the backoff counter value is not 0, an operation of decreasing the backoff counter value may be repeated. Through this, if the backoff counter value becomes 0, the aforementioned transmission may be performed.

On the contrary, if the channel is not idle in the 9 us slot, the corresponding node may wait again for an amount of time corresponding to the defer period and then verify whether the channel is available based on the backoff counter value (S1160). Based on the above, the corresponding node may occupy an unlicensed band and may perform transmission. Also, for example, the defer period for downlink/uplink, possible contention values, and maximum COT based on the priority class may be as shown in Table 13 below.

[Table 13]

| Priority Class | | Defer Period $T_d = 16 + m * 9us$ | Possible CW Values $\{CW_{min}, ... .., CW_{max}\}$ | Max $COT^{a,b}$ (ms) |
|---|---|---|---|---|
| 1 | DL | 25 | {3, 7} | 2 |
| | UL | 34 | | 2 |
| 2 | DL | 25 | {7, 15} | 3 |
| | UL | 34 | | 4 |
| 3 | DL | 43 | {15, 31, 63} | 8 or 10 |
| | UL | | {15, 31, 63, 127, 255, 511, 1023} | 8 or 10 |
| 4 | DL | 79 | {15, 31, 63, 127, 255, 511, 1023} | 8 or 10 |
| | UL | | | 8 or 10 |

Here, for example, a contention window size may be adjusted based on HARQ feedback. In detail, if HARQ feedback received for a first transmission that the corresponding node performs within the COT is NACK, the contention window size may be doubled in consideration of retransmission. On the contrary, if HARQ feedback received for each transmission is ACK, the contention window size may be reset to a CW min value. Here, adjusting the contention window size with the first transmission within the COT may result in a collision in the first transmission after the node occupies the channel. In the aforementioned case, the contention window size needs to be updated. On the other hand, receiving NACK for transmission after the first transmission within the COT may be more likely to occur based on a poor channel environment or other reasons rather than collision occurrence. Accordingly, as described above, the contention window size may be adjusted based on feedback of the first transmission within the COT.

As still another example, contention window adjustment for configured grant-based downlink (DL)/uplink (UL) transmission may be performed based on feedback information in downlink/ feedback information in uplink, respectively. Also, for example, when downlink feedback transmission is absent in uplink grant-based uplink transmission, contention window adjustment may be performed through a new data indicator (NDI), but is not limited to a specific embodiment.

Also, for example, an energy detection (ED) threshold (TL) may be determined based on a parameter, a channel bandwidth, and other values. As still another example, the ED threshold may be determined depending on whether a carrier frequency is shared with other wireless access technologies (e.g., WiFi) or whether an installation method ensures the use of only a specific wireless communication system (e.g., NR). As a detailed example, in the 5 GHz band coexisting with other systems, a maximum threshold may be set to -72 dBm for 20 MHz carrier. Here, -72dBm may be a value that is determined through comparison to other wireless communication systems (e.g., WiFi system), but may not be limited to a specific embodiment. As still another example, if only a specific wireless communication system (e.g., NR) uses a carrier frequency, the maximum threshold may be used as -62dBm for 20MHz carrier and a threshold for uplink transmission may be set through RRC signaling, but may not be limited to a specific embodiment.

Then, FIG. 12 illustrates a COT sharing and discovery burst transmission applied to the present disclosure. Referring to FIG. 12, in the case of occupying a channel the aforementioned Type 1 LBT procedure, transmission may be performed within the COT. Here, Type 2 transmission may have three options based on a gap section within the COT, which may be as shown in Table 14 below. For example, Type 2A (LBT cat 2) transmission may set a COT gap to 25 us or more and may use the same for discovery burst transmission. For example, Type 2A may be considered for SSB transmission, but may not be limited thereto. As still another example, Type 2B transmission may be a type that applies a COT gap of 16 us. Also, Type 2C transmission may be a type that applies a COT gap of 16 us or less. For example, if next transmission is 16 us at most, idle sensing may not be required and Type 2C may be applied.

[Table 14]

> - Type 2A (LBT cat 2) - applies COT gap of 25 us or more/uses the same for discovery burst transmission
> - Type 2B - applies COT gap of 16 us
> - Type 2C (LBT cat 1) -applies COT gap of 16 us or less

Here, for the aforementioned COT sharing, the gap may be smaller than an OFDM symbol interval. This is because an OFDM symbol-based resource assignment method may be insufficient and a method of indicating CP extension may be applied by taking the aforementioned issues into consideration. That is, extending a CP faster than an OFDM symbol boundary may be indicated and one of Table 15 below may be indicated.

[Table 15]

| |
|---|
| - No CP extension<br>- $C_2T_{symb}$ - $T_{TA}$ - 16 μs => use with Type 2B<br>- $C_3T_{symb}$ - $T_{TA}$ - 25 μs, => use with Type 2A<br>- Tsymb - 25 μs - option that does not compensate for TA |

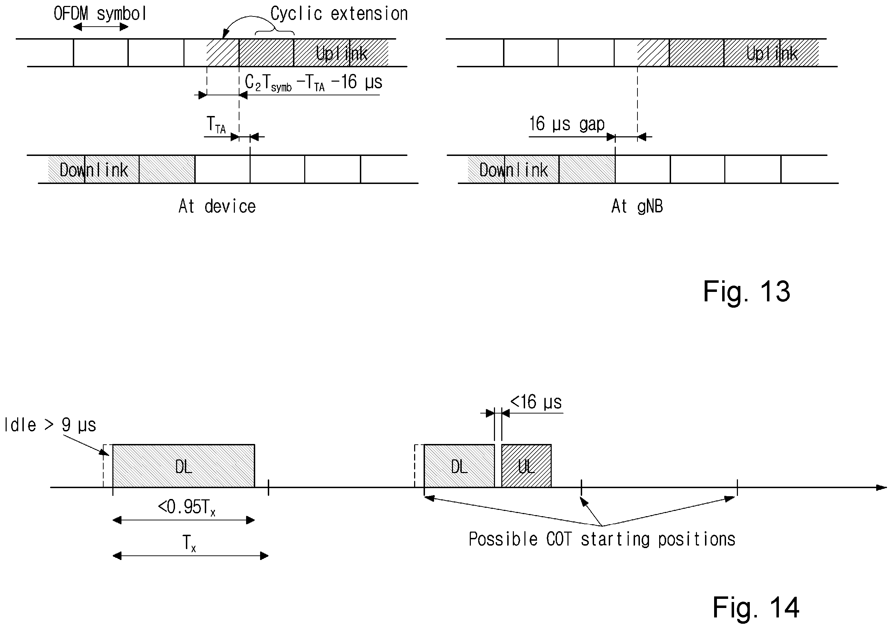

For example, FIG. 13 illustrates a method of applying CP extension to uplink when performing COT sharing between downlink and uplink, applicable to the present disclosure. FIG. 13 illustrates a case in which C2 is set to 1 with 16 us gap based on COT sharing, but is not limited thereto. Referring to FIG. 13, a TA value may be considered to ensure the 16 us gap between downlink and uplink in a base station. For example, C values may be set through RRC signaling. Also, CP extension for uplink transmission may be indicated in uplink grant.

As still another example, a case of performing channel access based on a FBE method may be considered. The FBE method may be a channel occupancy method applicable to a region (e.g., specific building, factory) in which absence of other systems is ensured through a rule. Here, in the case of performing channel access based on the FBE method, transmission may start at a specific point in time. As a detailed example, FIG. 14 illustrates a semi-static channel access procedure applicable to the present disclosure. Referring to FIG. 14, a single COT may start every Tx ms. Here, when the channel is idle for at least 9 us before the COT, the channel may be occupied. Here, Tx ms may be set to one of 1 ms to 10 ms values. Also, the gap may be at least 5% of Tx. Here, COT sharing may be used in a similar manner as the LBE and the gap may be 16 us at most.

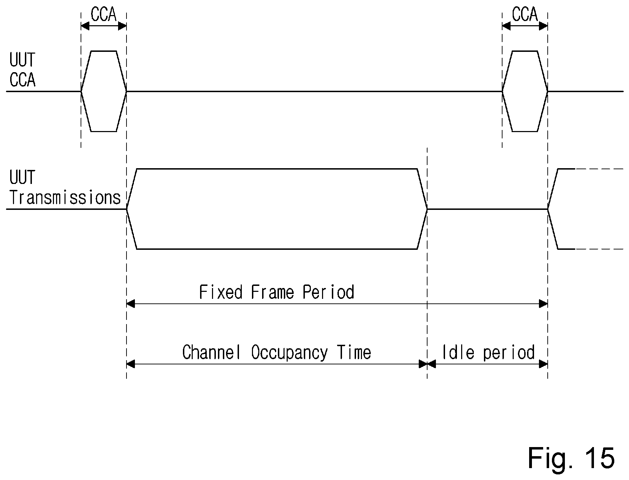

For example, FIG. 15 illustrates a method of performing channel occupancy applicable to the present disclosure. Referring to FIG. 15, a device may perform CCA check in a CCA observation period not smaller than 20 us based on energy detection, before performing transmission in an operating channel. Also, for example, in the case of transmitting a control frame (e.g., ACK, block ACK) in consideration of multicast, a CCA procedure may be skipped and transmission may be performed immediately after receiving a packet. That is, the UE may perform control frame transmission without a new CCA procedure, but this may not exceed the maximum COT.

For example, when the device transmits an ACK/NACK signal after receiving data, the device may skip the CCA, but this needs to be within the maximum COT. Also, for example, transmission of a signal with a maximum duty cycle within 5% of 50 ms as an observation period through short control signaling may be performed without CCA, but may not be limited to a specific form.

Also, for example, an LBT category may be considered. The LBT category may consider category 1 that performs transmission immediately after a short switching gap, category 2 that performs LBT without random backoff, category 3 in which a contention window of a fixed size and random backoff are performed, and category 4 in which a contention window of a variable size and random backoff are performed.

In detail, category 1 may be a method of performing transmission immediately after a short switching gap. Here, category 1 may be used to perform transmission immediately after a switching gap within one COT. The switching gap from receive to transmit within one COT may include a switching time of a transceiver, and may not be longer than 16 us. Also, for example, category 2 may be an operation of performing LBT without random backoff. For example, in the case of performing LBT, category 2 may be a method of performing initial CCA and, if the channel is idle, occupying the channel and transmitting data in an unlicensed channel. Here, random backoff count may not be performed. On the other hand, category 3 may be an LBT method in which random backoff is performed with the contention window of the fixed size. As a case in which LBT is performed based on category 3, if the channel is idle by performing initial CCA, random backoff may be performed with the fixed contention window (e.g., fixed "q" value in which q denotes a value that determines a contention window size of selecting a random N counter between 0 and q). For example, a random backoff operation allows a counter value randomly selected within the contention window to occupy the channel when the value is 0 by decreasing the count depending on whether the channel is idle for each ECCA slot.

As still another example, category 4 may be an LBT method in which random backoff is performed with the contention window of the variable size. Category 4 may differ from category 3 in that category 4 has a variable contention window. On the other hand, an operation of occupying the channel by applying an N value based on a random backoff value may be the same. That is, category 4 may be the same as category 3 except that the contention window size may differ based on a time or an event compared to category 3, and may be used in a plurality of wireless communication systems (e.g., LAA, NR-U, WiFi), but is not limited to a specific embodiment. Here, for example, different channel access categories (e.g., LBT category) may be defined and used for transmission of other channels/signals within one COT. Also, for example, in a new wireless communication system (e.g., NR-U), category 4 LBT and category 2 may be used within the COT, which may be as shown in Table 16 below. Also, category 2 LBT may be used for discovery burst transmission in a case in which there is no unicast transmission and a feature of the transmission is a limited transmission with transmission in a time of 1 ms or less and of which duty cycle is 5% or less, but may not be limited to a specific form.

[Table 16]

Channel access LBT mechanisms defined for NR-U along with their designation:
- Cat 4 LBT with a contention window (Type 1)
- Cat 2 LBT with 25 $\mu$s gap (Type 2A)
- Cat 2 LBT with 16 $\mu$s gap (Type 2B)
- Cat 1 LBT with no more than 16 $\mu$s gap without channel sensing (Type 2C)
A transmission burst length limit of 0.584 ms is applied when using this.

In the following, a method of assigning frequency resources such that sidelink communication of a wireless communication system (e.g., NR) may be operable in an unlicensed frequency band is described. For example, currently, a size of an RB set included in 20 MHz in the unlicensed band (e.g., NR-U) of the wireless communication system may be different based on an SCS. For example, for 15 kHz SCS, the size of the RB set may be 100 to 110 PRBs. Also, for 30 kHz SCS, the size of the RB set may be 50 to 55 PRBs. Here, for example, in the case of assigning interlace-based RB resources, some interlaces may include 11 PRBs, but remaining interlaces may include only 10 PRBs.

Here, for example, a case of varying a size of a subchannel to use the entire bandwidth in sidelink may be considered. That is, a case of differently setting the number of PRBs included in each subchannel may be considered. However, in a case in which different subchannel sizes are set, it may be difficult to guarantee transmission if retransmission is performed after initial transmission of a TB with the same transport block size (TBS). Considering the above, the subchannel size (i.e., number of PRBs) in each subchannel may be set to be the same, but may not be limited thereto. However, if the subchannel size is set to be the same in each subchannel, some may not be used in a single interlace based on interlace-based RB resource configuration.

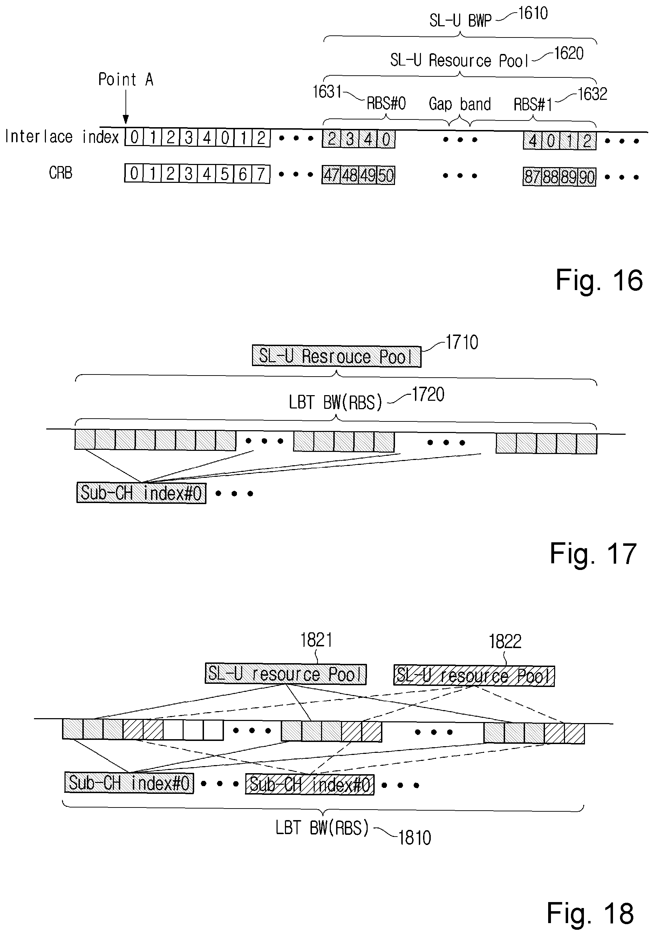

Here, for example, FIG. 16 illustrates a method of setting an RBS in a BWP and resource pool in a sidelink unlicensed band to which the present disclosure may apply. A frequency domain resource structure of a wireless communication system (e.g., NR SL-U) of the sidelink unlicensed band may consider a bandwidth part (BWP), a resource pool (RP), an interlaced RB, and an RBS (RB set). Here, the RBS may be considered even in the wireless communication system (e.g., NR U) of the unlicensed band, and it is not limited to a specific embodiment.

Referring to FIG. 16, a single sidelink unlicensed band (SL-U) BWP 1610 may be configured in a sidelink UE, a single SL-U RP 1620 may be configured in the SL-U BWP 1610, and two RBSs 1631 and 1632 may be configured in the SL-U RP 1620. However, it is only an example for clarity of description and is not limited to the aforementioned embodiment. Here, for example, in an SL-U system, an interlace structure may be considered to meet OCB and PSD requirements required in the unlicensed band. That is, in the SL-U system, the sidelink interlace structure may be performed by performing CRB indexing based on point A that is a reference frequency point of a single carrier. In FIG. 16, a frequency domain corresponding to CBR index 47 to CRB index 90 may be configured as the SL-U BWP 1610 based on configuration of the SL-U BWP 1610 and frequency resources including two RBSs RBS 1631 and 1632 may be configured based on configuration of the SL-U RP 1620, but it is only an example and may not be limited thereto. In the following, a frequency domain resource configuration method for the SL-U system as shown in FIG.16 and a resource assignment method for actual SL-U data transmission based thereon are described.

For example, in a channel access procedure of a sidelink unlicensed band wireless communication system (e.g., NR SL-U), the aforementioned type 1 channel access procedure and type 2 channel access procedure may be applied. Also, for example, UE-to-UE COT sharing may be applied to UEs that operate in the sidelink unlicensed band. That is, a single Tx UE may share a portion of unlicensed resources acquired through the LBT procedure with an Rx UE or another UE.

For example, as in the existing sidelink wireless communication system (NR SL), frequency resources may be configured based on a subchannel in the wireless communication system (e.g., NR SL-U) of the sidelink unlicensed band. That is, the term "subchannel" may be used even in NR SL-U as in NR SL. However, the name of the subchannel may be differently configured in the wireless communication system (e.g., NR SL-U) of the sidelink unlicensed band and is not limited to a specific embodiment. The following description is made based on the subchannel for clarity of description.

For example, a single interlace-based RB structure to meet the aforementioned unlicensed band requirements may be defined as M RBs in the frequency domain. Here, the interlace-based RB structure may be defined as RBs with an interval corresponding to the uniform number of RBs. As still another example, the interlace-based RB structure may be configured using RBs with an interval corresponding the ununiform number of RBs and is not limited to a specific embodiment.

Here, the interlace-based RB structure may be preconfigured commonly for NR SL UEs in a cell-specific or carrier-specific manner according to configuration based on a bandwidth/numerology. As still another example, the interlace-based RB structure may be configured specifically in a physical link between UEs by higher layer configuration, and is not limited to a specific embodiment. Here, the interlace-based RB structure may be applied to all interlaces regardless of the carrier bandwidth. Therefore, the interlace-based RB structure may be configured according to a CRB that is defined based on point A that is a specific reference point in the frequency domain. Here, a single subchannel may be defined to be preconfigured with k interlaces. As still another example, a single subchannel may be configured with k interlaces through higher layer signaling. k may be the number of interlaces per subchannel. The number of interlaces per subchannel may have a fraction (or decimal value) or an integer value, which is described below. Also, for example, when a plurality of RBSs are configured within a single SL BWP, frequency resource assignment indication may include RBS assignment information and subchannel or interlace-based RB frequency resource assignment information.

As still another example, resource assignment may be performed based on an interlace-based RB unit rather than a "subchannel" unit in the sidelink unlicensed band system (e.g., NR SL-U). Here, the frequency resource assignment unit may be an interlace-based RB unit rather than the existing subchannel, but this is only an example and is not limited to a specific embodiment.

In the following, both the subchannel unit and interlace-based RB unit may be considered as resource allocation units in the frequency domain. Here, the subchannel may be configured with k interlaces or may be configured with the number of consecutive RBs. However, in the following, for clarity of description, the "subchannel unit" based on the interlace structure is described as the unit of frequency resource assignment. However, it is also possible to configure frequency resource assignment with the interlace-based RB unit rather than the subchannel unit by applying the proposed method, and is not limited to a specific form.

Here, for example, FIG. 17 illustrates a method of configuring a sidelink unlicensed band resource pool based on consecutive frequency resources to which the present disclosure may apply. Referring to FIG. 17, a sidelink unlicensed band resource pool 1710 may be configured based on consecutive frequency resources. Here, the sidelink unlicensed band resource pool 1710 may be indicated with only an RBS index. In more detail, referring to FIG. 17, a case in which only a single RBS 1720 is configured in the sidelink unlicensed band resource pool 1710 in consideration of the LBT procedure of the unlicensed band may be considered. Here, resource pool configuration of the sidelink unlicensed band may be indicated to the UE based on consecutive frequency resources from perspective of the frequency domain (hereinafter, Case 1). For example, to meet requirements such as the aforementioned OCB and PSD in the unlicensed band, most frequency resources (e.g., >80%) within at least one LBT BW (RBS 1720) may be configured as a single resource pool. Considering the aforementioned regulation, there may be a limit in at least one resource pool configuration for a single RBS within a single SL BWP. That is, only one resource pool may be configured to be present within a single RBS to include most frequency resources. Through this, the aforementioned regulation may be satisfied. Here, for example, sidelink transmission may be performed by selecting a resource used for actual transmission through interlace-based frequency resource assignment from a resource pool configured based on consecutive frequency resources.

On the other hand, FIG. 18 illustrates a frequency resource-based sidelink unlicensed band resource pool configuration using interlace assignment to which the present disclosure may apply. Referring to FIG. 18, to satisfy the regulation for frequency utilization in the unlicensed band, a resource pool may be configured using a new interlace RB or an interlace RB-based subchannel from an initial resource pool configuration stage. That is, the interlace RB or the interlace RB-based subchannel may be used from resource pool configuration. For example, referring to FIG. 18, in the case of configuring a frequency resource-based sidelink unlicensed band resource pool using interlace assignment, frequency resources for resource pool configuration may be indicated based on combination of RBS and interlace /subchannel index (hereinafter, Case 2).

That is, in FIG. 18, to meet the requirements such as the aforementioned OCB and PSD, resource pools 1821 and 1822 may be configured using interlace RBs or interlace RB-based subchannels from the initial resource pool configuration stage. Therefore, the resource pools 1821 and 1822 of the sidelink unlicensed band may not have a consecutive subchannel or PRB structure. That is, the resource pools 1821 and 1822 of the sidelink unlicensed band may be configured in nonconsecutive PRBs based on interlace assignment and may meet the requirements such as the aforementioned OCB and PSD accordingly. Also, dissimilar to Case 1 (FIG. 17), a plurality of resource pools of the sidelink unlicensed band may be configured in a single RBS and thus, flexibility of resource configuration may be provided.

Here, all the resource pool configuration methods corresponding to the aforementioned Case 1 and Case 2 may consider the interlace-based frequency resource assignment method. However, there may be a difference regarding whether to configure frequency resources with consecutive frequency resources in a stage of configuring a single resource pool, which is similar to the existing NR SL, (Case 1) or whether to configure a nonconsecutive resource pool in consideration of an interlace structure from a resource pool configuration stage (Case 2). In the following, an RBS-based sidelink unlicensed band resource pool configuration method is described based on the above.

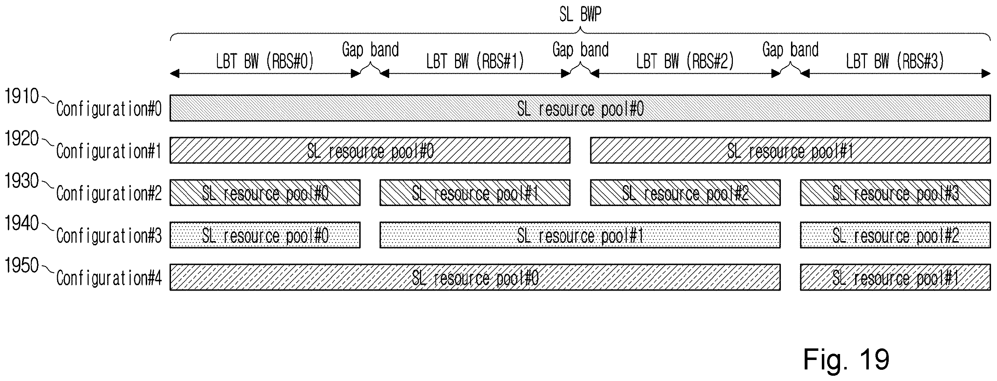

FIG. 19 illustrates a sidelink unlicensed band resource pool configuration method applicable to the present disclosure.

A sidelink unlicensed band resource pool may be configured based on RBS. For example, the sidelink resource pool may be configured through a resource pool start point and the number of subchannels within the resource pool based on consecutive subchannels. For example, as described above, even in the sidelink unlicensed band pool, the resource pool corresponding to the LBT BW may be configured through the resource pool start point and the number of subchannels within the resource pool based on consecutive subchannels. RBS configuration and index may be considered to effectively configure the sidelink unlicensed band resource pool. That is, the sidelink unlicensed band resource pool may configure a single resource pool by indicating the RBS configuration/index through resource pool configuration signaling.

As a detailed example, a single resource pool may include one RBS or one or more RBSs. Therefore, in the case of a specific resource pool, frequency configuration for the resource pool may be performed by providing consecutive RBS index configuration associated with the specific resource pool. Here, in the case of performing frequency configuration of the resource pool based on consecutive RBS index configuration, the resource pool may utilize gap band resources between RBSs, thereby maximizing frequency resource efficiency. A case in which four RBSs are configured within a single sidelink BWP may be considered. Here, since a gap band may be configured between the respective RBSs, 3 gap bands may be configured and provided. Here, the resource pool of the sidelink unlicensed band may be configured through consecutive RBS indexes based on the LBT BW. In detail, in a single resource pool configuration, frequency domain resource configuration may be provided through RBS index information. For example, in one resource pool configuration, frequency domain resource configuration may be provided through information on a start RBS index and the number of consecutive RBSs.

Referring to FIG. 19, in configuration 0 1910, a resource pool may be configured with four consecutive RBSs from RBS#0 to RBS#3. Here, configuration 0 1910 may indicate resource pool configuration by indicating RBS#0 that is a start RBS index and 4 that is the number of consecutive RBSs. As still another example, in configuration 1 1920, as two consecutive RBSs, RBS#0 and RBS#1 may be configured as sidelink resource pool#0, and RBS#2 and RBS#3 may be configured as sidelink resource pool #1. Here, configuration 1 may indicate resource pool configuration by indicating RBS#0, RBS#2 that is a start RBS index and 2 that is the number of consecutive RBSs for each resource pool. As still another example, in configuration 2 1930, sidelink resource pool#0 may be configured in RBS#0, sidelink resource pool#1 may be configured in RBS#1, sidelink resource pool#2 may be configured in RBS#2, and sidelink resource pool#3 may be configured in RBS#3. Here, since each resource pool corresponds to each RBS, the corresponding RBS index and the number of RBSs, 1, may be indicated. As still another example, in configuration 3 1940, sidelink resource pool#0 may be configured in RBS#0, sidelink resource pool#1 may be configured in RBS#1 and RBS#2, and sidelink resource pool#2 may be configured in RBS#3. Here, the start RBS index and the number of RBSs corresponding to each sidelink resource pool may be indicated and, through this, configuration for each resource pool may be indicated. As still another example, in configuration 4 1950, sidelink resource pool#0 may be configured in RBS#0, RBS#1, and RBS#2, and sidelink resource pool#1 may be configured in RBS#3. Here, the start RBS index and the number of RBSs corresponding to each sidelink resource pool may be indicated and, through this, configuration for each resource pool may be indicated. However, resource pool configuration of FIG. 19 is only an example and may not be limited to the aforementioned embodiment.

Here, for example, when a plurality of RBSs are configured within the SL BWP, frequency resource information for resource pool configuration of the sidelink unlicensed band may be indicated to the UE through at least one of interlace/sub-channel-based configuration information and RBS configuration information.

Here, when all of the interlace/subchannel-based configuration information and RBS configuration information are provided, frequency resource configuration information for a single resource pool may be provided to the UE through intersecting frequency resource information. Also, when an intra-cell guard band (GB) present between consecutive RBSs are configured within a single resource pool, frequency resources corresponding to the GB may be used for sidelink unlicensed band communication as a portion of the resource pool.

In the following, a method of allocating frequency resources for sidelink unlicensed band data transmission and reception in the frequency domain is described based on the above. The matters described below may be applied to any method of configuring at least one resource pool among the aforementioned interlace/subchannel-based configuration information and RBS configuration information, and is not limited to a specific embodiment.

Also, for example, the following matters may be applied to both the case in which consecutive frequency resources are configured in a single resource pool (Case 1) and the case in which the resource pool is configured based on nonconsecutive frequency resources (Case 2). However, for clarity of description, description is made based on the case in which the single resource pool is configured based on consecutive frequency resources (Case 1), but may be interchangeably applied to the case in which the resource pool is configured in nonconsecutive frequency resources (Case 2), and it may not be limited to a specific form.

For example, frequency resource configuration of the sidelink unlicensed band may be performed according to start subchannel information and the number of consecutive subchannels based on consecutive frequency resources. Also, in the case of time resource configuration of the sidelink unlicensed band, the resource pool may be configured through bitmap application among remaining slots excluded based on at least one of an SSB transmission slot, a reserved slot, and TDD UL-DL configuration, and may not be limited to a specific embodiment.

However, the following description is made based on the frequency resource configuration of the sidelink unlicensed band. For example, indication (i.e., bit size) for a sidelink resource set (SL RBS) index may be configured by considering a total number of SL RBSs included in a single SL BWP. Here, indication for the SL RBS index may indicate one or multiple SL RBS indexes. For example, SL RBSs may be consecutively configured in the frequency domain at all times, but may not be limited thereto. However, for clarity of description, the following description is made based on SL RBSs that are consecutively configured in the frequency domain.

Also, for example, frequency resource reservation may be indicated through a physical sidelink control channel (PSCCH). Here, frequency resource reservation indication may be performed in a second slot or the second slot or a third slot based on the PSCCH received within the lowest interlace index among interlace indexes defined within a single carrier bandwidth. As described above, the interlace structure may be set to 10 interlaces (i.e., M=10) in 15 kHz SCS based on the LBT BW considered in the unlicensed band, and may be set to 5 interlaces (i.e., M=5) in 30 kHz SCS. In detail, the aforementioned interlace structure may be configured by considering that the number of RBs to configure a single RBS based on the LBT BW is 100 to 110 RBs in 15 kHz SCS and 50 to 55 RBs in 30 kHz SCS.

That is, in the case of 15 kHz SCS, some resources (i.e., RB) of the same interlace may be present in every 10 RBs. However, an interlace value may be configured as a different value based on at least one of a different RBS size (LBT BW), SCS, and the number of RBs that constitute a single interlace, and may not be limited to a specific embodiment.

For example, unlike the existing wireless communication system, the sidelink unlicensed band (SL-U) of the current wireless communication system (e.g., NR) may need to be configured by considering various regulations and unlicensed band channel environments required in the unlicensed channel. The SL-U may consider various slot structures (e.g., slot, non-slot) for effective operation in the unlicensed band. As another example, the SL-U may apply an interlace-based transmission method (interlaced-RB based transmission) as a channel transmission method. As another example, SL-U may apply a new resource assignment method, a channel access procedure that considers LBT, a dynamic PSFCH resource structure, and other physical channel structures, and may not be limited to a specific form.

Here, there is a need for a HARQ procedure that considers an additional transmission method and resource assignment method to satisfy an additional slot structure, a new channel access procedure, and other unlicensed band regulations. In detail, for example, a procedure may be performed in which the Tx UE receives SL HARQ-ACK information from the Rx UE through the PSFCH and then reports the same to the base station (gNB) through the uplink channel (Uu link, PUCCH or PUSCH). A method for this is described below.

The Tx UE that performs sidelink communication may receive sidelink HARQ (SL HARQ) feedback information (ACK or NACK) corresponding to the PSSCH/PSCCH transmission from the Rx UE through the PSFCH. As another example, the Tx UE may determine SL HARQ feedback information based on whether the PSFCH is received within a PSFCH occasion through a PSFCH reception slot. In detail, for example, the Tx UE may transmit the PSCCH/PSSCH to the plurality of Rx UEs through sidelink communication based on a groupcast type. Here, the Rx UE may transmit only NACK based on groupcast option 1. For example, groupcast option 1 may be an option in which the Rx UE operates by feeding back a negative response only when PSSCH decoding fails. That is, the Rx UE may not transmit a separate feedback response to the Tx UE if PSSCH decoding is successful, and the Tx UE may recognize that the Rx UE receives the PSSCH if the Tx UE does not receive a separate feedback response from the Rx UE. On the contrary, if the Tx UE receives a feedback response from the Rx UE, the Tx UE may recognize that the Rx UE fails in PSSCH decoding. That is, the Tx UE may recognize NACK depending on whether the PSFCH is received.

The Tx UE may acquire SL feedback information from the Rx UE using different methods, based on an SL HARQ feedback transmission method and a cast type of sidelink communication. The Tx UE may report SL HARQ feedback information received from the Rx UE to the base station. For example, the Tx UE may operate based on a sidelink resource assignment mode 1 in which sidelink communication resources are assigned from the base station, but is not limited thereto. To detect downlink control information format 3_0 (DCI format 3_0), the Tx UE may monitor a physical downlink control information (PDCCH) scrambled with a sidelink radio network temporary identifier (SL-RNTI) or SL configured scheduling (CS)-RNTI. Here, DCI format 3_0 may be a DCI format that delivers sidelink communication-related grant information. For example, the UE may report SL HARQ feedback information to the base station through a PUCCH or a physical uplink shared channel (PUSCH) in a primary cell (PCell) or UL PCell within a physical uplink control channel (PUCCH) group that includes a cell to which the PDCCH is transmitted.

The Tx UE may report, to the base station, SL HARQ feedback information associated with sidelink (SL) configured grant Type 1 or Type 2 PSSCH transmission within a single time period that is determined based on Sl-PeriodCG parameter. In detail, the Tx UE may transmit SL HARQ feedback information on PSSCH transmission to the base station in a PUCCH occasion present after a last time resource within a set of time resources within a single time period based on the Sl-PeriodCG parameter.

Here, for example, when the Tx UE performs SL HARQ reporting to the base station, the Tx UE may report ACK or NACK to the base station as SL HARQ feedback information. Here, an SL HARQ-ACK information determination method may be required, and a method for this is described below.

When the Tx UE performs PSFCH transmission to the Tx UE, the Tx UE may not acquire SL HARQ feedback information due to LBT failure in the SL-U. Considering the above, the SL-U may be configured to have at least one PSFCH reception occasion (hereinafter, ROC) corresponding to a single PSSCH transmission in consideration of LBT failure. When the Tx UE performs SL HARQ feedback reporting to the base station, an SL HARQ feedback reporting method may be differently performed based on a scheduling transmission method for sidelink transmission (e.g., dynamic grant, configured grant type 1 or type 2), a cast type, HARQ-ACK feedback option (e.g., unicast, groupcast option 1 and option 2), uplink PUCCH resource configuration, and other configuration. For example, the following description is made based on a case in which a plurality of PSFCH ROCs corresponding to a single PSSCH are configured by considering LBT (channel access procedure) failure in the SL-U. However, it may not be limited thereto.

If the plurality of PSFCH ROCs corresponding to a single PSSCH are configured, the Tx UE may generate HARQ-ACK information to report SL HARQ feedback information. The Tx UE may transmit the generated HARQ-ACK information to the base station through an uplink channel. For example, in the existing SL system, a single PSFCH ROC associated with a single PSSCH transmission may be implicitly determined in the existing SL system. On the other hand, the following description is made based on a case in which a plurality of associated PSFCH ROCs are provided for a single PSSCH transmission by considering LBT characteristics of the SL-U system. In the plurality of PSFCH ROCs corresponding to a single PSSCH transmission, resources may be configured based on at least one of time, frequency, space, and code domains. The UE may be configured or indicated in advance with configured resource information based on higher layer signaling.

For example, a value indicating a PSSCH-to-PSFCH minimum time gap may be configured by the higher layer parameter. A PSSCH-to-PSFCH minimum time gap value may be determined on a slot basis as a minimum time required for the Rx UE to receive the PSSCH and then perform PSFCH transmission. In detail, for example, when the PSSCH-to-PSFCH minimum time gap value is set to a single slot, the Rx UE may receive the PSSCH and then may perform PSFCH transmission in an earliest PSFCH slot present after a single slot. Here, the PSSCH-to-PSFCH minimum time gap value may be set to be plural based on higher layer signaling. When the PSSCH-to-PSFCH minimum time gap value is set to be plural, the Rx UE may perform SL HARQ feedback transmission based on a plurality of PSFCH ROCs associated with SL HARQ feedback of single PSSCH reception. In detail, the Rx UE may receive the PSSCH and then, may perform SL HARQ feedback transmission starting from the earliest PSFCH ROC if the PSSCH-to-PSFCH minimum time gap value exceeds. The Rx UE may perform SL HARQ feedback transmission in each PSFCH corresponding to each PSSCH-to-PSFCH minimum time gap value.

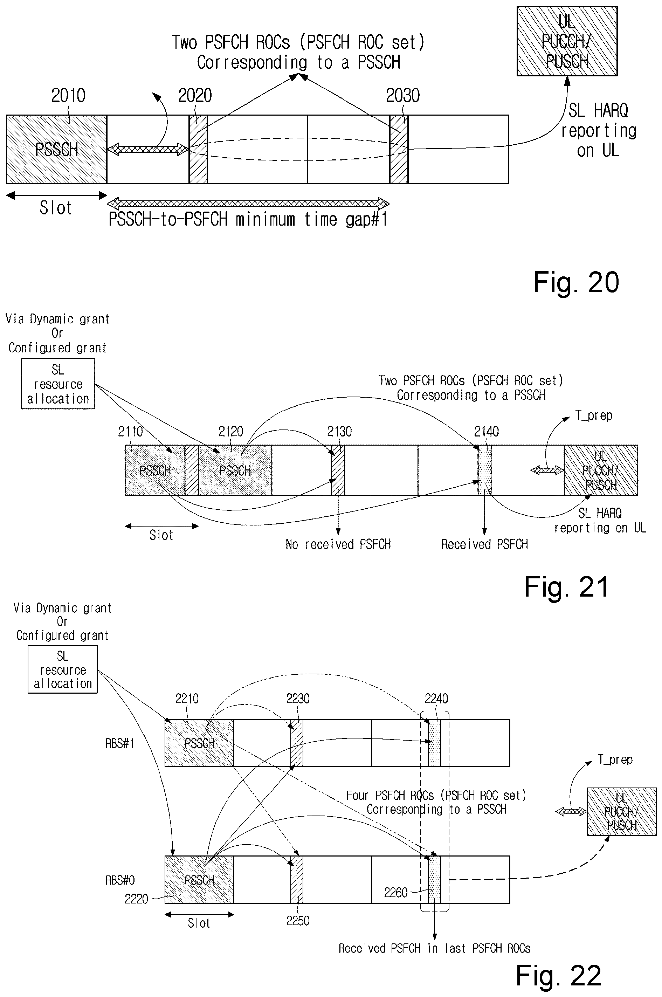

FIG. 20 illustrates a relationship between PSSCH and PSFCH ROC sets.

Referring to FIG. 20, there may be PSFCH ROCs 2020 and 2030 associated with reception of a single PSSCH 2010. When the Rx UE receives a PSSCH from the Tx UE in the SL-U, the Rx UE may occupy a channel by performing LBT and then may transmit SL HARQ feedback information through a PSFCH. For example, in FIG. 20, two PSFCH ROCs 2020 and 2030 may be set to be plural by considering a case in which the channel is not occupied when the aforementioned channel access procedure (e.g., channel access procedure type 1 or type 2) is performed. That is, the UE may receive a plurality of minimum time gap configuration information based on a single PSSCH transmission point in time and based on this, may receive a plurality of PSFCH ROCs in the time domain. In the following, for clarity of description, a set of PSFCH ROCs associated with a single PSSCH reception is referred to as a PSFCH ROC set. However, it is only an example for clarity of description and is not limited to a specific form.

Also, for example, in terms of frequency, one or more PSFCH ROCs associated with HARQ feedback of a single PSSCH may be configured. A plurality of PSFCH ROC resources in the frequency domain may be configured within a single RB set (RBS) or a plurality of RBSs, and are not limited to a specific form.

As another example, in terms of code, one or more PSFCH ROCs associated with a single PSSCH may be provided using a plurality of ID values or other indicator information for a single PSSCH. That is, one or more PSFCH ROCs associated with a single PSSCH may be provided using code domain resources as well as the frequency domain.

As another example, a new PSFCH format based on a demodulation reference signal (DMRS) may be considered. Here, one or more PSFCH antenna ports for a single PSSCH may provide a plurality of PSFCH ROCs. That is, the plurality of PSFCH ROCs may be provided in terms of space.

For example, the UE may generate SL HARQ feedback information to report to the base station (i.e., gNB) through PUCCH or PUSCH transmission based on the plurality of PSFCH ROCs, which is described below.

The UE may receive an indication for one of SL HARQ feedback modes based on a sidelink control information (SCI) format. For example, the UE may generate a single SL HARQ-ACK codeword that includes HARQ-ACK information. Also, the UE may expect to be provided with PUCCH resources or PUSCH resources from the base station based on a $T_{prep}$ value. The $T_{prep}$ value may refer to a time value that considers not receiving PUCCH resources or PUSCH resources after the end of a last OFDM symbol of the last PSFCH ROC associated with generating HARQ-ACK information to be reported through the PUCCH or the PUSCH. That is, the UE may consider only a previous PSFCH ROC of the $T_{prep}$ value from a PUCCH resource or PUSCH resource start symbol and may not consider a PSFCH ROC within the $T_{prep}$ value from a PUCCH resource or PUSCH resource start symbol.

In detail, for example, SL HARQ-ACK feedback information for unicast may be considered. A unicast type may be a cast type indicated by a single SCI format. Here, one or more PSFCH ROCs associated with the corresponding indication may be configured. The Tx UE may generate HARQ-ACK information with the same value as HARQ-ACK information determined from the last PSFCH ROC set in the time domain, and the corresponding HARQ-ACK information may be SL HARQ feedback information that the Tx UE reports to the base station. In detail, when the Tx UE receives the PSFCH at least once within the PSFCH ROC set, the Tx UE may generate HARQ-ACK information associated with the PSFCH ROC set based on the last received PSFCH among the received PSFCHs. On the other hand, when the Tx UE does not receive the PSFCH within the last PSFCH ROC set and does not receive ACK even in its previous PSFCH ROC set, the Tx UE may generate NACK.

As another example, when the Tx UE does not receive the PSFCH within the last PSFCH ROC set and receives the PSFCH at least once within its previous PSFCH ROC set, the Tx UE may generate HARQ-ACK information associated with a PSFCH ROC set based on the last received PSFCH within the corresponding PSFCH ROC set. Here, the entire PSFCH ROC set may be present before $T_{prep}$ time than a PUCCH occasion. For example, when a specific PSFCH ROC is located at a time after $T_{prep}$, the corresponding PSFCH ROC may not be considered in the corresponding PUCCH occasion. That is, $T_{prep}$ may determine the last PSFCH ROC that is considered in the PUCCH occasion.

FIG. 21 illustrates a method of generating SL HARQ-ACK information using a PSFCH ROC set within single RBS-based unicast, applied to the present disclosure. Referring to FIG. 21, unicast PSSCH transmission may be indicated by one SCI. When the unicast PSSCH transmission is indicated by one SCI, the Tx UE may generate SL HARQ feedback information based on a plurality of PSFCH ROCs 2130 and 2140 within a PSFCH ROC set associated with a PSSCH. For example, the UE may be configured with one sidelink grant information from the base station through a PDCCH (e.g., DCI format 3_0 or DCI format 3_1). In FIG. 21, two PSSCH transmission slots 2110 and 2120 may be assigned to the UE from the base station, but it is only an example for clarity of description. As another example, the UE may be provided with two PSSCH slot resources within a single CG transmission period based on configured grant (CG) configuration, but is not limited thereto.

Referring to FIG. 21, the plurality of PSFCH ROCs 2130 and 2140 corresponding to the PSSCH transmission slots 2110 and 2120, respectively, may be configured at different times, respectively. However, it is only clarity of description and the present disclosure is not limited thereto. In FIG. 21, two PSFCH ROCs may be associated with each PSSCH (2110, 2120), respectively, in consideration of LBT failure. The UE may transmit SL HARQ feedback information to the base station through an uplink channel in a first PUCCH transmission occasion after a PSFCH-to-PUCCH processing latency. For example, SL HARQ feedback information that the UE needs to report to the base station through the uplink channel may be generated based on that the PSFCH is received in the last PSFCH ROC 2140 between two PSFCH ROCs 2130 and 2140.

As another example, HARQ-ACK information may be generated by considering at least one of the frequency domain, the code domain, and the spatial domain in addition to a time domain method. For example, the UE may be configured with at least one RB set within the resource pool, and associated PSFCH ROCs may be located in different RBSs. In the case described above, one or more last PSFCH ROCs may be present. Here, when the UE receives the PSFCH at least once within the last PSFCH ROC set, the UE may determine HARQ-ACK information from the last received PSFCH corresponding to at least one of the lowest RBS index, interlace index, RB index, subchannel index, and PSFCH resource index among the last received PSFCHs. On the other hand, when the UE does not receive the PSFCH in the last PSFCH ROC set and does not receive any ACK in its previous PSFCH ROC set, the UE may generate NACK and may report the same to the base station.

FIG. 22 illustrates a method of generating SL HARQ-ACK information using a PSFCH ROC set within multi-RBS-based unicast, applied to the present disclosure. Referring to FIG. 22, a plurality of PSFCH ROCs 2230, 2240, 2250, and 2260 associated with PSSCHs 2210 and 2220 transmitted in a plurality of RBSs may be considered. Here, the plurality of PSFCH ROCs 2230, 2240, 2250, and 2260 may be present in the plurality of RBSs. Referring to FIG. 22, when the UE performs last PSFCH reception in two RBSs, the UE needs to determine HARQ-ACK information for SL HARQ reporting.

For example, in FIG. 22, HARQ-ACK information may be determined based on the lowest RBS index, but may not be limited thereto. The UE may receive data in the PSSCH (2210, 2220) resources in two RBSs provided by a single sidelink grant. Referring to FIG. 22, the UE may generate SL HARQ feedback information by considering the last received PSFCHs 2240 and 2260 within the plurality of PSFCH ROCs 2230 and 2240, and 2250 and 2260 associated with the PSSCH (2210 and 2220) in two RBSs. For example, in FIG. 22, the UE may generate HARQ-ACK information corresponding to the PSFCH 2260 of RBS#0 with the lowest RBS index between the last PSFCHs 2240 and 2260, as SL HARQ feedback information to report to the base station. For example, in FIG. 22, as described above, $T_{prep}$ may determine the last PSFCH ROC considered in a PUCCH occasion.

As another example, HARQ-ACK feedback for groupcast option 2 may be considered. For example, HARQ-ACK feedback for groupcast option 2 may be considered based on SCI format 2-A in which a cast type indication field value is '01.' For example, when HARQ feedback is performed based on groupcast, all Rx UEs may operate to feed back a positive response or a negative response based on whether PSSCH decoding is successful, which may be an option 2 operation. Here, UEs operated in the SL-U may receive ACK that is HARQ feedback information on corresponding groupcast PSSCH transmission in at least one PSFCH ROC among a plurality of PSFCH ROCs. When the UE receives ACK for the corresponding groupcast PSSCH transmission in at least one PSFCH ROC among the plurality of PSFCH ROCs, the UE may determine SL HARQ feedback information to report to the base station as ACK. Otherwise, the UE may determine SL HARQ feedback information to report to the base station as NACK.

As another example, HARQ-ACK feedback for groupcast option 1 may be considered. For example, the UE may consider HARQ-ACK feedback for groupcast option 1 based on SCI format 2-A in which a cast type indication field value is '11.' For example, in the case of performing HARQ feedback based on groupcast, the Rx UE may operate to feed back a negative response only when PSSCH decoding fails, which may be an option 1 operation. For example, in the case of the existing groupcast option 1, the UE within a group that receives PSSCH transmission does not perform PSFCH transmission in an associated PSFCH ROC when it is determined as ACK, and performs the PSFCH transmission only when it is determined as NACK. On the other hand, in the SL-U, channel occupancy may fail due to LBT failure. The Tx UE may not determine whether the UE within the group has not performed the PSFCH transmission by determining it as ACK or has not transmitted NACK due to LBT failure. An operation for this may be required.

In detail, for example, HARQ-ACK feedback may be performed in the same manner as groupcast option 2. That is, even in a case in which groupcast option 1 is indicated by SCI, all the Rx UE may operate to feed back a positive response or a negative response based on whether PSSCH decoding is successful. The UEs that operate in the unlicensed band may determine and generate SL HARQ feedback information on the corresponding PSSCH (groupcast) as ACK if they receive ACK that is HARQ feedback information on the corresponding groupcast PSSCH transmission in at least one PSFCH ROC among the plurality of PSFCH ROCs. Otherwise, NACK is generated. Here, for example, in the case of considering ACK/NACK transmission and reception to adjust a contention window size (CWS), groupcast option 1 may determine HARQ-ACK information by considering CWS adjustment.

As another example, in a case in which groupcast option 1 is indicated by SCI, UEs that operate in the unlicensed band may determine and generate SL HARQ feedback information as ACK when there is no PSFCH reception in PSFCH ROCs within all of a plurality of PSFCH ROC sets. That is, only when all PSFCH reception is absent, the UEs that operate in the unlicensed band may determine that PSSCH reception is performed and otherwise, may generate NACK.

As another example, in a case in which groupcast option 1 is indicated by SCI, the UEs that operate in the unlicensed band may determine and generate SL HARQ feedback information as ACK if the number of absences of PSFCH reception in PSFCH ROCs within the plurality of PSFCH ROC sets is greater than a specific threshold. If the number of absences of PSFCH reception in PSFCH ROCs within the plurality of PSFCH ROC sets is less than the specific threshold, the UEs that operate in the unlicensed band may determine and generate NACK.

As another example, in a case in which groupcast option 1 is indicated by SCI, the UEs that operate in the unlicensed band may determine and generate HARQ-ACK information as ACK when PSFCH reception is absent in the last PSFCH ROCs within all of PSFCH ROC sets corresponding to PSSCH transmission. Otherwise, the UEs that operate in the unlicensed band may generate NACK.

As another example, new sidelink state information (e.g., LBT failure indicator) additionally representing LBT failure may be configured to HARQ-ACK information. For example, when the UE receives additional LBT failure indicator information through at least one PSFCH ROC, the UE may determine and generate HARQ-ACK information as NACK. Otherwise, the UEs that operate in the unlicensed band may generate ACK.

Also, the aforementioned matters may be applied based on a specific condition. In detail, for example, the aforementioned matters may be applied based on at least one of Table 17 below. That is, the aforementioned matters may be applied to a case in which COT sharing is indicated by a PSSCH Tx UE or the corresponding information is shared. As another example, the aforementioned matters may be applied to a case in which only a type 2 channel access is applied to all of a plurality of PSFCH ROCs associated with PSSCH transmission. As another example, the aforementioned matters may be applied to a case in which a channel access procedure is absent based on a short control signal regulation or a case in which PSFCH transmission is performed by applying a type 2-A channel access procedure, but may not be limited thereto.

[Table 17]

| |
|---|
| □ A case in which COT sharing is indicated by a PSSCH Tx UE or corresponding information is provided therefrom |
| □ A case in which only type 2 channel access is applied to all of PSFCH ROCs associated with PSSCH transmission (No Type 1 channel access for PSFCH transmission) |
| □ A case in which there is no channel access procedure according to short control signal regulation or when PSFCH is performed by applying Type 2-A channel access |

As another example, the UE may perform LBT in the SL-U and may perform PSCCH/PSSCH transmission if the channel is occupied by succeeding in LBT. Here, the PSCCH/PSSCH may not be transmitted in the provided resource due to LBT failure of the UE. The UE may receive a PDCCH (DCI format 3_0 or DCI format 3_1) from the base station and may be assigned with resources for sidelink communication through a dynamic grant or a configured grant. Here, a procedure of reporting SL HARQ feedback information to the base station may be performed by considering a case in which the UE does not receive the PSCCH/PSSCH due to LBT failure.

In detail, for example, when the Tx UE does not perform PSSCH transmission with any of resources provided by DCI format 3_0 due to LBT failure, the UE may generate ACK for the corresponding PSSCH. Here, a priority value of ACK may be the same as a priority value of the PSSCH that is not transmitted due to LBT failure. As another example, when the Tx UE does not perform PSSCH transmission only with any of period resources for a single CG due to LBT failure, the UE may generate ACK for the corresponding PSSCH. Here, a priority value of ACK may be the same as a priority value of the PSSCH that is not transmitted due to LBT failure. Although the Tx UE does not transmit the corresponding PSCCH/PSSCH with the provided resources due to LBT failure, the Tx UE may perform the aforementioned procedure of determining SL HARQ feedback information in order to report the SL HARQ feedback information to the base station.

Also, when the Tx UE does not perform PSSCH transmission with any of resources provided by DCI format 3_0 due to LBT failure, the UE may generate NACK for the corresponding PSSCH. Here, a priority value of NACK may be the same as a priority value of the PSSCH that is not transmitted due to LBT failure. As another example, when the Tx UE does not perform PSSCH transmission with any of period resources for a single CG due to LBT failure, the UE may generate NACK for the corresponding PSSCH. Here, the priority value of NACK may be the same as the priority value of the PSSCH that is not transmitted due to LBT failure. Although the Tx UE does not transmit the corresponding PSCCH/PSSCH with the provided resources due to LBT failure, the Tx UE may perform the aforementioned procedure of determining SL HARQ feedback information in order to report the SL HARQ feedback information to the base station.

Here, for example, when the Tx UE does not perform PSSCH transmission with any of resources provided by DCI format 3_0 due to LBT failure, the UE may report LBT failure indicator information to the base station through an uplink channel. For example, the UE may transmit LBT failure indicator information to the base station with SL HARQ feedback information including ACK or SL HARQ feedback information including NACK, and it may not be limited to a specific embodiment.

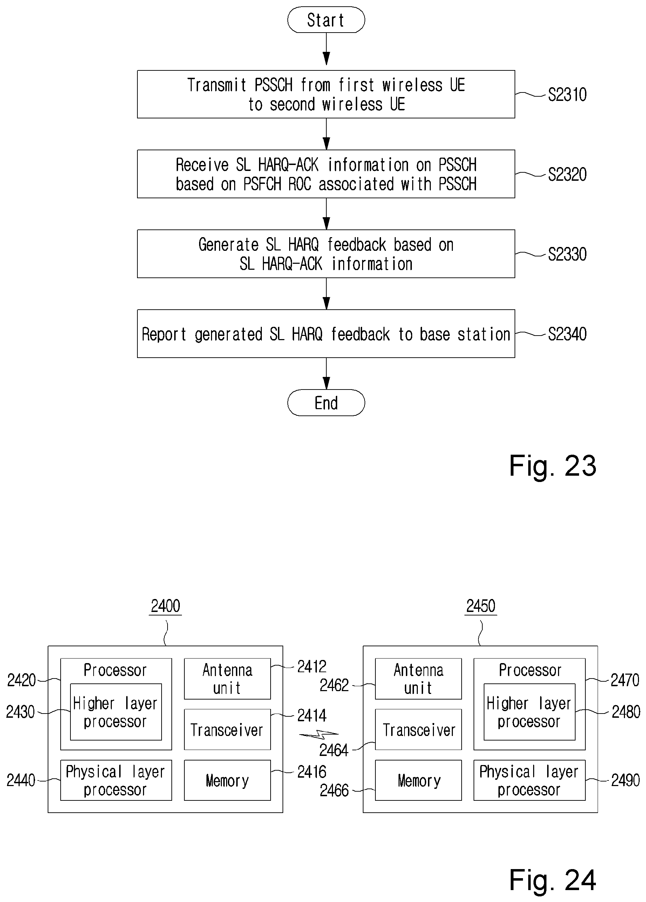

FIG. 23 illustrates a method of generating and reporting SL HARQ feedback information to a base station to which the present disclosure may apply. Referring to FIG. 23, a first wireless UE may transmit a PSSCH to a second wireless UE (S2310). Here, the first wireless UE may be a Tx UE and the second wireless UE may be an Rx UE, but it may not be limited thereto. Then, the first wireless UE may receive SL HARQ-ACK information on the PSSCH based on a PSFCH ROC associated with the PSSCH (S2320). The first wireless UE may generate SL HARQ feedback information based on SL HARQ-ACK information (S2330), and may report the generated SL HARQ feedback information to the base station (S2340). Here, the PSSCH may be associated with a PSFCH ROC set that includes a plurality of PSFCH ROCs based on the unlicensed band.

Also, for example, a case in which the first wireless UE performs SL communication with the second wireless UE based on SL unicast may be considered. For example, SL HARQ-ACK information may be determined based on a last PSFCH ROC set in a time domain among one or more PSFCH ROC sets associated with the PSSCH. In detail, as described above, the SL HARQ-ACK information may be generated based on a last received PSFCH among one or more PSFCHs received within the last PSFCH ROC set in the time domain. On the other hand, when the PSFCH is not received within the last PSFCH ROC set in the time domain among the one or more PSFCH ROC sets associated with the PSSCH and the PSFCH is not received within a PSFCH ROC set before the last PSFCH ROC set, the SL HARQ-ACK information may be generated as NACK. As another example, in a case in which one or more PSFCH ROC sets associated with the PSSCH are located in different RBSs and there are a plurality of last PSFCH ROC sets, if a plurality of PSFCHs are received within the plurality of last PSFCH ROC sets, SL HARQ feedback information may be generated based on the PSFCH with the lowest RBS index among the plurality of received PSFCHs.

As another example, a case in which the first wireless UE performs SL communication of receiving SL HARQ-ACK information from all the second wireless UEs within the group through an SL groupcast method may be considered. Here, when SL HARQ-ACK information on SL groupcast PSSCH transmission is received in at least one PSFCH ROC among a plurality of PSFCH ROCs within the PSFCH ROC set, SL HARQ feedback information may be determined as ACK.

As another example, a case in which the first wireless UE performs SL communication of receiving SL HARQ-ACK information from the second wireless UE that transmits NACK within a group using an SL groupcast method may be considered. Here, SL HARQ feedback information may be determined as ACK based on whether PSFCH reception is absent in all PSFCH ROCs within a PSFCH ROC set corresponding to PSSCH transmission.

FIG. 24 is a diagram illustrating a device configuration to which the present disclosure may apply.

Referring to FIG. 24, a first device 2400 and a second device 2450 may perform communication with each other. Here, for example, the first device 2400 may be a base station device, and the second device 2450 may be a terminal device. As another example, both the first device 2400 and the second device 2450 may be terminal devices. That is, the first device 2400 and the second device 2450 may be devices that perform communication with each other based on NR-based communication.

For example, a case in which the first device 2400 is the base station device and the second device 2450 is the terminal device may be considered. Here, the base station device 2400 may include a processor 2420, an antenna unit 2412, a transceiver 2414, and a memory 2416. The processor 2420 may perform baseband-related signal processing, and may include a higher layer processor 2430 and a physical layer processor 2440. The higher layer processor 2430 may process the operation of a medium access control (MAC) layer, a radio resource control (RRC) layer, or a higher layer thereof. The physical layer processor 2440 may process the operation of the physical (PHY) layer (e.g., uplink received signal processing, downlink transmission signal processing). The processor 2420 may also control the overall operation of the base station device 2400 in addition to performing baseband-related signal processing. The antenna unit 2412 may include at least one physical antenna, and may support multiple input multiple output (MIMO) transmission and reception in the case of including a plurality of antennas. Also, the antenna unit 2412 may support beamforming. The memory 2416 may store computationally processed information of the processor 2420, and software, operating systems, applications, and the like related to the operation of the base station device 2400, and may also include components, such as a buffer. The processor 2420 of the base station device 2400 may be configured to implement the operation of the base station in the embodiments described herein.

The terminal device 2450 may include a processor 2470, an antenna unit 2462, a transceiver 2464, and a memory 2466. For example, herein, the terminal device 2450 may perform communication with the base station device 2400. As another example, herein, the terminal device 2450 may perform sidelink communication with another terminal device. That is, the terminal device 2450 of the present invention refers to a device capable of communicating with at least one of the base station device 2400 and the other terminal device, and is not limited to communication with a specific device. The processor 2470 may perform baseband-related signal processing, and may include a higher layer processor 2480 and a physical layer processor 2490. The higher layer processor 2480 may process the operation of the MAC layer, the RRC layer, or the higher layer. The physical layer processor 2490 may process the operation of the PHY layer (e.g., downlink received signal processing, uplink transmission signal processing, sidelink signal processing). Also, in addition to performing baseband-related signal processing, the processor 2470 may also control the overall operation of the terminal device 2450. The antenna unit 2462 may include at least one physical antenna, and may support MIMO transmission and reception in the case of including a plurality of antennas. Also, the antenna unit 2462 may support beamforming. The memory 2466 may store computationally processed information of the processor 2470, and software, operating systems, applications, and the like related to the operation of the terminal device 2450, and may also include components, such as a buffer. The terminal device 2450 according to an example of the present invention may be associated with a vehicle. For example, the terminal device 2450 may be integrated in the vehicle, may be located in the vehicle, or may be located on the vehicle. Also, the terminal device 2450 according to the present invention may be the vehicle itself. Also, the terminal device 2450 according to the present invention may be at least one of a wearable terminal, AR/VR, an Internet of things (IoT) terminal, a robot terminal, and a public safety terminal. The terminal device 2450 to which the present invention may apply may include various types of communication devices that support an interactive service using sidelink, for services, for example, Internet access, service execution, navigation, real-time information, autonomous driving, and safety-and-risk diagnosis. Also, the terminal device 2450 may include an AR/VR device capable of performing a sidelink operation or any type of communication devices capable of performing a relay operation as a sensor.

Here, the vehicle/UE to which the present invention applies may include an autonomous vehicle/driving UE, a semi-autonomous vehicle/driving UE, and a non-autonomous vehicle/driving UE. Meanwhile, although the terminal device 2450 according to an example of the present invention is described in association with the vehicle, at least one of the UEs may not be associated with the vehicle. It is provided as an example only and should not be interpreted to limit application of the present invention. Also, the terminal device 2450 according to an example of the present invention may transmit a PSSCH to another terminal device. Here, the terminal device 2450 may be a Tx UE, and the other terminal device may be an Rx UE, but it may not be limited thereto. Then, the terminal device 2450 may receive SL HARQ-ACK information on the PSSCH based on a PSFCH ROC associated with the PSSCH. The terminal device 2450 may generate SL HARQ feedback information based on SL HARQ-ACK information and may report the generated SL HARQ feedback information to the base station device 2400. Here, based on the unlicensed band, the PSSCH may be associated with a PSFCH ROC set that includes a plurality of PSFCH ROCs.

Also, for example, a case in which the terminal device 2450 performs SL communication with another terminal device based on SL unicast may be considered. For example, SL HARQ-ACK information may be determined based on a last PSFCH ROC set in a time domain among one or more PSFCH ROC sets associated with the PSSCH. In detail, as described above, the SL HARQ-ACK information may be generated based on a last received PSFCH among one or more PSFCHs received within the last PSFCH ROC set in the time domain. On the other hand, when the PSFCH is not received within the last PSFCH ROC set in the time domain among the one or more PSFCH ROC sets associated with the PSSCH and the PSFCH is not received within a PSFCH ROC set before the last PSFCH ROC set, the SL HARQ-ACK information may be generated as NACK. As another example, in a case in which one or more PSFCH ROC sets associated with the PSSCH are located in different RBSs and there are a plurality of last PSFCH ROC sets, if a plurality of PSFCHs are received within the plurality of last PSFCH ROC sets, SL HARQ feedback information may be generated based on the PSFCH with the lowest RBS index among the plurality of received PSFCHs.

As another example, a case in which the terminal device 2450 performs SL communication of receiving SL HARQ-ACK information from all the other terminal devices within the group through an SL groupcast method may be considered. Here, when SL HARQ-ACK information on SL groupcast PSSCH transmission is received in at least one PSFCH ROC among a plurality of PSFCH ROCs within the PSFCH ROC set, SL HARQ feedback information may be determined as ACK.

As another example, a case in which the terminal device 2450 performs SL communication of receiving SL HARQ-ACK information from the other terminal device that transmits NACK within a group using an SL groupcast method may be considered. Here, SL HARQ feedback information may be determined as ACK based on whether PSFCH reception is absent in all PSFCH ROCs within a PSFCH ROC set corresponding to PSSCH transmission.

Also, various embodiments of the present disclosure may be implemented by hardware, firmware, software, or combination thereof. In the case of implementation by hardware, the embodiments may be implemented by one or more application specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine executable instructions (e.g., operating system, application, firmware, program, etc.) for enabling to implement operations according to the methods of the various embodiments, and a device or a non-transitory computer-readable medium executable on a computer storing such a software or instructions.

Various embodiments of the present disclosure are to explain representative aspect of the present disclosure rather than listing all possible combinations and description made in the various embodiments may be independently applied or may be applied in combination of two or more.

INDUSTRIAL APPLICABILITY

The above matters may apply to other systems.

## Claims

1. A first wireless user equipment (UE) that operates in a sidelink unlicensed band in a wireless communication system, the first wireless UE comprising:

   at least one antenna configured to transmit and receive one or more wireless signals;
   at least one processor; and
   a memory configured to store instructions for the first wireless UE when executed by the at least one processor, wherein the first wireless UE is configured to,
   transmit sidelink (SL) data to a second wireless UE through a physical sidelink shared channel (PSSCH),
   receive SL hybrid automatic repeat request (HARQ)-ACK information on the PSSCH based on a physical sidelink feedback channel (PSFCH) reception occasion (ROC) associated with the PSSCH, and
   generate SL HARQ feedback information based on the SL HARQ-ACK information and report the same to a base station, and

   based on the unlicensed band, the PSSCH is associated with a PSFCH ROC set that includes a plurality of PSFCH ROCs.

2. The first wireless UE of claim 1, wherein the first wireless UE performs SL communication with the second wireless UE based on SL unicast.

3. The first wireless UE of claim 2, wherein

   the SL HARQ-ACK information is determined based on a last PSFCH ROC set in a time domain among the one or more PSFCH ROC sets associated with the PSSCH, and
   the SL HARQ-ACK information is generated based on a last received PSFCH among one or more PSFCHs received within the last PSFCH ROC set in the time domain.

4. The first wireless UE of claim 3, wherein, when a PSFCH is not received within the last PSFCH ROC set in the time domain among the one or more PSFCH ROC sets associated with the PSSCH and the PSFCH is not received within a PSFCH ROC set before the last PSFCH ROC set, the SL HARQ-ACK information is generated as NACK.

5. The first wireless UE of claim 2, wherein, in a case in which the one or more PSFCH ROC sets associated with the PSSCH are located in different resource block sets (RBSs) and accordingly, a plurality of last PSFCH ROC sets are present, if a plurality of PSFCHs are received within the plurality of last PSFCH ROC sets, the SL HARQ feedback information is generated based on a PSFCH with a lowest RBS index among the plurality of received PSFCHs.

6. The first wireless UE of claim 1, wherein, in a case in which the first wireless UE performs SL communication of receiving SL HARQ-ACK information from all of the second wireless UEs within a group using an SL groupcast method, if the SL HARQ-ACK information on SL groupcast PSSCH transmission is received in at least one PSFCH ROC among the plurality of PSFCH ROCs within the PSFCH ROC set, the SL HARQ feedback information is determined as ACK.

7. The first wireless UE of claim 1, wherein, in a case in which the first wireless UE performs SL communication of receiving SL HARQ-ACK information from the second wireless UEs transmitting NACK within a group using an SL groupcast method, the SL HARQ feedback information is determined as ACK depending on whether PSFCH reception is absent in PSFCH ROCs within all PSFCH ROC sets corresponding to PSSCH transmission.

| Downlink frame $i$ |
|---|

| Uplink frame $i$ |
|---|

$N_{TA}\ T_s$

# Fig. 1

Fig. 2

One SL slot

One subchannel

One subchannel

AGC

DMRS

DMRS

DMRS

DMRS

Tx-Rx switching

DMRS

2nd stage

AGC

PSCCH

DMRS

2nd stage

DMRS

DMRS

Tx-Rx switching

Fig. 3

C-V2X

| V2V | Reserved | Reserved | Tolling | Control | I2V | PVD/ Security |
|------|----------|----------|---------|---------|------|----------|
| CH 1 | CH 2 | CH 3 | CH 4 | CH 5 | CH 6 | CH 7 |

5,855    5,865    5,875    5,885    5,895    5,905    5,915    5,925 MHz

## Fig. 4

sl-TimeResource(length = $L_{bitmap}$)
(e.g.,0011111100)

□ SL BWP
▨ Excluded RB
▦ Reserved slot
▨ Excluded slot
▦ SSB slot

sl-RB-Number

Frequency(RBs)

sl-StartRBsubchannel

sl-SubchannelSize

Time(slots)

$10240 \times 2^{\mu}$

## Fig. 5

Fig. 6

| U-NII-1<br>(100 MHz) | U-NII-2A<br>(100 MHz) | U-NII-2B<br>(120 MHz) | U-NII-2C<br>(255 MHz) | U-NII-3<br>(100 MHz)<br>Part 15.247 Rules<br>(125 MHz) | 25 MHz | U-NII-4<br>(75 MHz) |
|---|---|---|---|---|---|---|

5.150 GHz   5.250 GHz   5.350 GHz        5.470 GHz                              5.725 GHz        5.850 GHz   5.925 GHz

# Fig. 7

PSD limitation

◄─── Bandwidth ───►          ⇒          ◄─── Bandwidth ───►

# Fig. 8

Fig. 9

$$RB_{s,x}^{start,\mu} = N_{grid,x}^{start,\mu} + \begin{cases} 0 & s = 0 \\ GB_{s-1,x}^{start,\mu} + GB_{s-1,x}^{size,\mu} & otherwise \end{cases}$$

$$RB_{s,x}^{end,\mu} = N_{grid,x}^{start,\mu} + \begin{cases} N_{grid,x}^{size,\mu} & s = N_{RB\text{-}set,x}-1 \\ GB_{s,x}^{start,\mu} & otherwise \end{cases}$$

$$N_{BWP,i}^{size,\mu} = RB_{s1,uplink}^{end,\mu} - RB_{s0,uplink}^{start,\mu}$$

$$N_{BWP,i}^{start,\mu} = RB_{s0,uplink}^{start,\mu}$$

Carrier bandwidth

LBT bandwidth(RB set1,s1) — 911

Guardband — 913

nrofCRB(0..15)

startCRB(0..274), $GB_{s0,x}^{start,\mu}$

LBT bandwidth(RB set0,s0) — 912

$RB_{s1,uplink}^{end,\mu}$

$RB_{s1,uplink}^{start,\mu}$

$RB_{s0,uplink}^{end,\mu}$

$RB_{s0,uplink}^{start,\mu}$

BWP 3 — 923

BWP 2 — 922

BWP 1 — 921

EP 4 615 118 A1

Point A

BWP

1010 — | 0 | 1 | 2 | 3 | 4 | 0 | — — — — — | 2 | 3 | 4 | 0 | — — — — — — | 1 | 2 | 3 | 4 |

## Fig. 10

S1110

Wait until idle for
$T_d = 16 + m \cdot 9\mu s$

S1120

Initialize backoff
counter $N \in \{0, CW\}$

S1130

$N = 0$?  →Y→ Transmit

N  S1140

Decrement counter N

S1150

Y  Channel idle
for $9\mu s$?

N  S1160

Wait until idle for
$T_d = 16 + m \cdot 9\mu s$

## Fig. 11

Type 2A, B or C depending on gap size

≤25 μs(Type 2B or 2C)

| DL data | UL data | DL data |

Type 1

COT

## Fig. 12

Fig. 13

Fig. 14

Fig. 15

Fig. 16

Fig. 17

Fig. 18

SL BWP

| LBT BW (RBS#0) | Gap band | LBT BW (RBS#1) | Gap band | LBT BW (RBS#2) | Gap band | LBT BW (RBS#3) |

1910 Configuration#0

SL resource pool#0

1920 Configuration#1

SL resource pool#0 | SL resource pool#1

1930 Configuration#2

SL resource pool#0 | SL resource pool#1 | SL resource pool#2 | SL resource pool#3

1940 Configuration#3

SL resource pool#0 | SL resource pool#1 | SL resource pool#2

1950 Configuration#4

SL resource pool#0 | SL resource pool#1

Fig. 19

Two PSFCH ROCs (PSFCH ROC set)
Corresponding to a PSSCH

2010          2020          2030

PSSCH

Slot

PSSCH-to-PSFCH minimum time gap#1

UL
PUCCH/
PUSCH

SL HARQ
reporting
on UL

## Fig. 20

Via Dynamic grant
Or
Configured grant

SL
resource
allocation

Two PSFCH ROCs (PSFCH ROC set)
Corresponding to a PSSCH

2110          2120          2130                          2140

PSSCH          PSSCH

Slot

No received PSFCH          Received PSFCH

$T\_prep$

UL
PUCCH/
PUSCH

SL HARQ
reporting on UL

## Fig. 21

Via Dynamic grant
Or
Configured grant

SL
resource
allocation

2210          2230                    2240

RBS#1          PSSCH

Four PSFCH ROCs (PSFCH ROC set)
Corresponding to a PSSCH

$T\_prep$

UL
PUCCH/
PUSCH

RBS#0          PSSCH
2220

Slot          2250

2260

Received PSFCH in last PSFCH ROCs

## Fig. 22

Start

Transmit PSSCH from first wireless UE to second wireless UE — S2310

Receive SL HARQ-ACK information on PSSCH based on PSFCH ROC associated with PSSCH — S2320

Generate SL HARQ feedback based on SL HARQ-ACK information — S2330

Report generated SL HARQ feedback to base station — S2340

End

## Fig. 23

2400

- 2420 Processor
- 2430 Higher layer processor
- 2440 Physical layer processor
- 2412 Antenna unit
- 2414 Transceiver
- 2416 Memory

2450

- 2462 Antenna unit
- 2464 Transceiver
- 2466 Memory
- 2470 Processor
- 2480 Higher layer processor
- 2490 Physical layer processor

## Fig. 24

## INTERNATIONAL SEARCH REPORT

| International application No. |
|---|
| **PCT/KR2023/017348** |

### A. CLASSIFICATION OF SUBJECT MATTER

**H04W 72/21**(2023.01)i; **H04L 1/18**(2006.01)i; **H04L 5/00**(2006.01)i; **H04W 72/04**(2009.01)i; **H04W 74/08**(2009.01)i; **H04W 92/18**(2009.01)i

According to International Patent Classification (IPC) or to both national classification and IPC

### B. FIELDS SEARCHED

Minimum documentation searched (classification system followed by classification symbols)

H04W 72/21(2023.01); H04W 76/14(2018.01); H04W 76/20(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), PSFCH, HARQ, ROC, 세트(set)

### C. DOCUMENTS CONSIDERED TO BE RELEVANT

| Category* | Citation of document, with indication, where appropriate, of the relevant passages | Relevant to claim No. |
|---|---|---|
| Y<br>A | SAMSUNG. Corrections on Sidelink. R1-2007454, 3GPP TSG RAN WG1 Meeting #102-e. 04 September 2020.<br>See sections 16.3, 16.3.1 and 16.5. | 1-2<br>3-7 |
| Y | MODERATOR (HUAWEI). FL summary#4 for AI 9.4.1.2 SL-U physical channel design framework. R1-2210255, 3GPP TSG RAN WG1 Meeting #110bis-e. 18 October 2022.<br>See section 2.4.2.2. | 1-2 |
| A | SAMSUNG. On physical channel design framework for sidelink on FR1 unlicensed spectrum. R1-2209732, 3GPP TSG RAN WG1 Meeting #110bis-e. 30 September 2022.<br>See section 5. | 1-7 |
| A | NOKIA et al. On Physical Channel Design Framework for SL-U. R1-2208357, 3GPP TSG RAN WG1 Meeting #110bis-e. 30 September 2022.<br>See section 4. | 1-7 |
| A | US 2022-0201781 A1 (LG ELECTRONICS INC.) 23 June 2022 (2022-06-23)<br>See paragraphs [0244]-[0255]; and claims 1-20. | 1-7 |

☐ Further documents are listed in the continuation of Box C.   ☑ See patent family annex.

| | |
|---|---|
| *   Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **01 February 2024** | **01 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/017348**

| Patent document cited in search report | | | Publication date (day/month/year) | Patent family member(s) | | | Publication date (day/month/year) |
|---|---|---|---|---|---|---|---|
| US | 2022-0201781 | A1 | 23 June 2022 | CN | 114557119 | A | 27 May 2022 |
| | | | | EP | 4011169 | A1 | 15 June 2022 |
| | | | | JP | 2022-553048 | A | 21 December 2022 |
| | | | | JP | 7324369 | B2 | 09 August 2023 |
| | | | | KR | 10-2022-0046674 | A | 14 April 2022 |
| | | | | KR | 10-2577649 | B1 | 13 September 2023 |
| | | | | US | 11483885 | B2 | 25 October 2022 |
| | | | | US | 11856624 | B2 | 26 December 2023 |
| | | | | US | 2022-0394792 | A1 | 08 December 2022 |
| | | | | WO | 2021-091294 | A1 | 14 May 2021 |

Form PCT/ISA/210 (patent family annex) (July 2022)